# EUROPEAN PATENT APPLICATION

(11) **EP 3 043 237 A1**
(43) Date of publication of application: **13.07.2016**
(21) Application number: 16150303.2
(22) Date of filing: 06.01.2016
(51) Int. Cl.: G06F 1/16, G06F 3/00, G06F 3/01, G06F 3/03

(54) **DISPLAY SYSTEM, CONTROL METHOD FOR DISPLAY DEVICE, AND COMPUTER PROGRAM**

(30) Priority: 06.01.2015 JP 2015000749; 06.01.2015 JP 2015000750; 15.09.2015 JP 2015181843
(71) Applicant: Seiko Epson Corporation, Shinjuku-ku Tokyo (JP)
(72) Inventor: KOBAYASHI, Shinichi, Suwa-shi, Nagano 392-8502 (JP); TAKANO, Masahide, Suwa-shi, Nagano 392-8502 (JP)
(74) Representative: Miller Sturt Kenyon

(57) **Abstract**

A display system includes a head-mounted display device including a display section worn on the head of a user and an operation device configured separately from the display section. The head-mounted display device performs, according to the operation device, with an image display section, AR display related to an outside scene transmitted through the image display section.

## Description

### BACKGROUND

### 1. Technical Field

The present invention relates to a display system including a display device, a control method for the display device, and a computer program.

### 2. Related Art

As a method for input operation to a display device such as a head mounted display (HMD) worn on the head and used by a user, there has been proposed a method of wearing a device on a finger and detecting a movement of the finger with the device (see, for example, JP-A-2000-284886 (Patent Literature 1) and JP-A-2000-29619 (Patent Literature 2)). Patent Literature 1 discloses a configuration for performing a text input using the device worn on the finger. Patent Literature 2 discloses a configuration for performing operation equivalent to the operation of a mouse using the HMD and a light emitting body worn on the finger.

When the text input or the input operation equivalent to the operation of the mouse is performed in the HMD, a wrong input causes a result against an intention of the user. Therefore, in other related art the user gazes at input characters or a cursor indicating a pointed position and performs accurate operation without an error. Therefore, the user is required to gaze at display of the display device and carefully operate the display device. There is a demand for a method with which the user can control the HMD with more intuitive operation.

### SUMMARY

An advantage of some aspects of the invention is to provide a display system that can control, with more intuitive input operation, a display device worn on the head of a user, a control method for the display device, and a computer program.

A display system according to an aspect of the invention includes: a display device worn on the head of a user and including a display section of a transmission type configured to transmit an outside scene and cause the user to visually recognize the outside scene; and an operation target object configured separately from the display section. The display device includes a control section configured to perform, according to the operation target object, with the display section, AR display related to the outside scene transmitted through the display section.

According to the aspect of the invention, the display device worn on the head of the user performs the AR display related to the outside scene according to operation of an operation device separate from the display device. Therefore, it is possible to control the AR display with intuitive input operation.

In the display system according to the aspect of the invention, the display device may perform, with the display section, in association with the operation target object, the AR display of a control target associated image associated with the operation target object.

According to the aspect of the invention with this configuration, it is possible to display information concerning operation of the operation target object in a form that is easily intuitively grasped.

In the display system according to the aspect of the invention, the operation target object may be an operation device including: an operation section configured to receive operation by the user; and a communication section configured to transmit data indicating the operation received by the operation section to the display device, and the control section of the display device may perform the AR display with the display section on the basis of operation of the operation device.

According to the aspect of the invention with this configuration, the display device worn on the head of the user can quickly detect the operation of the operation device separate from the display device and perform the AR display corresponding to the operation.

In the display system according to the aspect of the invention, the control section of the display device may perform, on the basis of the operation of the operation device, in a form associated with the operation section, with the display section, the AR display related to the outside scene transmitted through the display section.

According to the aspect of the invention with this configuration, it is possible to surely detect, in the display device, the operation in the operation device. Further, it is possible to reduce a load on the display device related to the detection of the operation.

In the display system according to the aspect of the invention, the control section may detect the operation of the operation section on the basis of data transmitted from the operation device and changes, according to the detected operation, the AR display being displayed on the display section.

According to the aspect of the invention with this configuration, it is possible to change the AR display by operating the operation device while the AR display is performed.

In the display system according to the aspect of the invention, the control section may be capable of setting allocation of the AR display to the operation section.

In this case, the control section may be capable of executing processing for updating the allocation of the AR display to the operation section.

In the display system according to the aspect of the invention, the control section of the display device may calculate relative positions of the operation device and the display device and perform the AR display with the display section on the basis of the calculated relative positions.

According to the aspect of the invention with this configuration, it is possible to control display according to the relative positions of the operation device and the display device.

In the display system according to the aspect of the invention, the operation section may include a touch operation section configured to detect contact operation, the touch operation section may include a plurality of operation regions, and the control section may display, with the display section, the AR display allocated to the operation region operated by the touch operation section.

According to the aspect of the invention with this configuration, by performing touch operation with the operation device, it is possible to perform various kinds of operation for the AR display.

In the display device according to the aspect of the invention, the operation section of the operation device may detect a movement of the operation device as operation.

According to the aspect of the invention with this configuration, it is possible to perform operation on the display device by moving the operation device.

In the display system according to the aspect of the invention, the operation device may include an image pickup section and transmit, with the communication section, data including a picked-up image of the image pickup section to the display device.

According to the aspect of the invention with this configuration, it is possible to perform image pickup with the operation device separate from the display device and display a picked-up image with the display device.

A display system according to another aspect of the invention includes: a display device worn on the head of a user and including a display section of a transmission type configured to transmit an outside scene and cause the user to visually recognize the outside scene; and an operation target object configured separately from the display section. The display device includes a control section configured to perform, on the basis of operation to the operation target object, display control including processing for transitioning a screen displayed by the display section.

According to the aspect of the invention, the display device worn on the head of the user is caused to transition a screen according to operation of an operation device separate from the display device. Therefore, it is possible to control the display device with more intuitive input operation.

In the display system according to the aspect of the invention, the operation target object may be an operation device including an operation section configured to receive operation by the user.

According to the aspect of the invention with this configuration, it is possible to detect operation on the operation device separate from the display device.

In the display system according to the aspect of the invention, the operation device may include a communication section configured to transmit data indicating the operation received by the operation section to the display device, and the control section of the display device may detect operation of the operation device on the basis of the data transmitted from the operation device.

According to the aspect of the invention with this configuration, it is possible to surely detect, in the display device, the operation in the operation device. Further, it is possible to reduce a load on the display device related to the detection of the operation.

In the display system according to the aspect of the invention, the operation section of the operation device may detect operation involving rotation, and, when data indicating the operation involving the rotation is transmitted from the operation device, the control section of the display device may transition, according to a rotating direction of the operation, a screen displayed by the display section.

According to the aspect of the invention with this configuration, the displayed screen is transitioned according to the rotating direction by the operation involving the rotation. Therefore, it is possible to realize more intuitive operation. Since the direction of the operation and the direction of the transition of the screen correspond to each other, it is possible to perform, for example, blind operation.

In the display system according to the aspect of the invention, the control section of the display device may perform, on the basis of data transmitted from the operation device, display control including any one of enlargement, reduction, and rotation of the image displayed by the display section.

According to the aspect of the invention with this configuration, it is possible to perform, with intuitive operation, display control of the image displayed by the display device.

In the display system according to the aspect of the invention, the display device may transmit data for an output to the operation device, and the operation device receives, with the communication section, the data for output transmitted by the display device and outputs the received data for output.

According to the aspect of the invention with this configuration, it is possible to use the operation device as a device that outputs data.

In the display system according to the aspect of the invention, the operation device may include an image pickup section and transmit, with the communication section, data including a picked-up image of the image pickup section to the display device.

According to the aspect of the invention with this configuration, it is possible to perform image pickup with the operation device separate from the display device and display a picked-up image with the display device.

In the display system according to the aspect of the invention, the control section of the display device may receive the data including the picked-up image from the operation device and calculate, on the basis of the received data, relative positions of the operation device and the display device.

According to the aspect of the invention with this configuration, it is possible to quickly calculate the relative positions of the operation device and the display device.

In the display system according to the aspect of the invention, the operation section of the operation device may detect a movement of the operation device as operation.

According to the aspect of the invention with this configuration, it is possible to perform operation on the display device by moving the operation device.

In the display system according to the aspect of the invention, the control section of the display device may calculate relative positions of the operation device and the display device and control display of the display section on the basis of the calculated relative positions.

According to the aspect of the invention with this configuration, it is possible to control the display according to the relative positions of the operation device and the display device.

In the display system according to the aspect of the invention, the display device may include an image pickup section, and the control section may calculate the relative positions of the operation device and the display device on the basis of a picked-up image of the image pickup section.

According to the aspect of the invention with this configuration, it is possible to quickly calculate the relative positions of the operation device and the display device.

In the display system according to the aspect of the invention, the display section may be a display section of a transmission type configured to transmit an outside scene and cause the user to visually recognize the outside scene.

According to the aspect of the invention with this configuration, the user can operate the operation device while viewing the outside scene and control display of the display device. Since the user can intuitively perform the operation without gazing only at the display device, the display system is suitable when the user uses the display device while viewing the outside scene.

In the display system according to the aspect of the invention, the operation device may include a wearing section worn on the body of the user.

According to the aspect of the invention with this configuration, it is possible to perform more intuitive input operation and control the display device using the operation device worn on the body of the user.

In the display system according to the aspect of the invention, when detecting the operation target object, the control section included in the display device may display, according to the operation target object, on the display section, a control target associated image associated with the operation target object.

According to the aspect of the invention with this configuration, it is possible to provide the user with information concerning the operation target object separate from the display device to allow the user to easily understand the information.

In the display system according to the aspect of the invention, when detecting operation on the operation target object for which the control target associated image is displayed, the control section included in the display device may execute processing corresponding to operation content and the control target associated image.

According to the aspect of the invention with this configuration, the display device executes the processing according to the operation on the operation target object. Therefore, it is possible to realize intuitive operation using the operation target object.

In the display system according to the aspect of the invention, the display device may include a detecting section configured to detect operation on the operation target object.

According to the aspect of the invention with this configuration, the display device quickly detects the operation on the operation target object. Even if the operation target object does not have a communication function, the display device can execute the processing according to the operation of the operation target object.

In the display system according to the aspect of the invention, the display device may include an image pickup section, and the control section may detect the operation target object on the basis of a picked-up image of the image pickup section and detect operation on the operation target object.

According to the aspect of the invention with this configuration, even if the operation target object does not execute communication, the display device can detect the operation target object and detect the operation on the operation target object.

In the display system according to the aspect of the invention, the display device may include a data storing section configured to store data for the AR display for performing the AR display of an image for operation corresponding to the operation section of the operation target object, and the control section may be capable of changing the data for the AR display stored by the data storing section.

According to the aspect of the invention with this configuration, data can be changed for a function of performing the AR display according to the operation target object. Therefore, it is possible to change the data to correspond to a new operation target object or an unknown operation target object. Consequently, it is possible to reduce restrictions concerning an operation target object set as a target of the AR display. Further, it is possible to attain improvement of convenience.

In the display system according to the aspect of the invention, the data for the AR display stored by the data storing section may include data for associating the image for operation and the operation section of the operation target object, and the control section may be capable of changing association of the image for operation and the operation section of the operation target object in the data for the AR display stored by the data storing section.

According to the aspect of the invention with this configuration, it is possible to change the association of the operation target object and the AR display.

A computer program according to still another aspect of the invention is executable by a control section that controls a display device worn on the head of a user and including a display section of a transmission type configured to transmit an outside scene and cause the user to visually recognize the outside scene, the computer program causing the control section to: detect an operation target object configured separately from the display section; detect an operation section included in the operation target section; display an image for operation in a position corresponding to the detected operation section of the operation target object; detect operation concerning the image for operation; and execute processing corresponding to the image for operation for which the operation is detected.

According to the aspect of the invention, the display device worn on the head of the user displays the image for operation corresponding to the operation target object separate from the display device and executes processing according to the operation concerning the image for operation. Therefore, it is possible to cause the display device to execute processing using the operation target object. Further, it is possible to perform intuitive operation on the display device.

A computer program according to yet another aspect of the invention is executable by a computer that controls a display device including a display section worn on the head of a user, the computer program causing, when an operation target object configured separately from the display section receives operation by the user, on the basis of the operation of the operation target object, the display section to perform AR display related to an outside scene transmitted through the display section.

According to the aspect of the invention, when performing the AR display related to the outside scene, the display device including the display section worn on the head of the user reflects the operation of the operation target object separate from the display device. Therefore, it is possible to control the AR display according to intuitive input operation.

A control method according to still yet another aspect of the invention is a control method for controlling a display device, which includes a display section worn on the head of a user, using an operation target object configured separately from the display section, the control method including: receiving operation by the user with a control section of the operation target object; and performing, with the display device, on the basis of the operation of the operation target object, AR display related to an outside scene transmitted through the display section.

According to the aspect of the invention, when performing the AR display related to the outside scene, the display device including the display section worn on the head of the user reflects the operation of the operation target object separate from the display device. Therefore, it is possible to control the AR display according to intuitive input operation.

A computer program according to further another aspect of the invention is executable by a computer that controls a display device including a display section worn on the head of a user, the computer program performing, when an operation target object configured separately from the display section receives operation by the user, on the basis of the operation of the operation target object, display control including processing for transitioning a screen displayed by the display section.

According to the aspect of the invention, the display device including the display section worn on the head of the user is controlled to operate the operation target object separate from the display device and transition the screen. Therefore, it is possible to control the display device according to more intuitive input operation.

A server apparatus according to still further another aspect of the invention is connected to a communication line and configured to transmit the computer program through the communication line.

According to the aspect of the invention, the display device including the display section worn on the head of the user is controlled to operate the operation target object separate from the display device and transition the screen. Therefore, it is possible to control the display device according to more intuitive input operation.

A control method according to yet further another aspect of the invention is a control method for controlling a display device including a display section worn on the head of a user using an operation target object configured separately from the display section, the control method including: receiving operation by the user with the operation target object; transmitting data indicating the received operation to the display section; and performing, with the display device, on the basis of data transmitted from the operation target object, display control including processing for transitioning a screen displayed by the display section to another screen.

According to the aspect of the invention, the display device including the display section worn on the head of the user is controlled to operate the operation target object separate from the display device and transition the screen. Therefore, it is possible to control the display device according to more intuitive input operation.

The invention can also be implemented in various forms other than the head-mounted display device. The invention can be implemented in forms such as a control method for the head-mounted display device, an information system including the head-mounted display device, a computer program for implementing the control method for the head-mounted display device and the information system, a recording medium having recorded therein the computer program, a server apparatus for distributing the computer program, and a data signal including the computer program and embodied in a carrier wave.

### BRIEF DESCRIPTION OF THE DRAWINGS

Embodiments of the invention will now be described by way of example only with reference to the accompanying drawings, wherein like numbers reference like elements.
Fig. 1 is an explanatory diagram showing the schematic configuration of a display system according to an embodiment.
Figs. 2A to 2C are explanatory diagrams showing the configuration of an operation device.
Fig. 3 is a functional block diagram of the operation device.
Fig. 4 is a functional block diagram of a head-mounted display device.
Fig. 5 is a flowchart for explaining the operation of the operation device.
Fig. 6 is a flowchart for explaining the operation of the head-mounted display device.
Figs. 7A and 7B are explanatory diagrams showing examples of AR display for setting.
Figs. 8A and 8B are diagrams showing examples of processing executed according to operation of the operation device.
Fig. 9 is a flowchart for explaining the operation of the head-mounted display device.
Figs. 10A and 10B are flowcharts for explaining other examples of the operation of the head-mounted display device.
Figs. 11A and 11B are diagrams showing examples of processing executed according to the operation of the operation device.
Fig. 12 is a diagram showing another example of the processing executed according to the operation of the operation device.
Fig. 13 is an explanatory diagram showing a configuration example of an operation target object.
Fig. 14 is an explanatory diagram showing another configuration example of the operation target object.
Fig. 15 is a flowchart for explaining the operation of the head-mounted display device.
Fig. 16 is an explanatory diagram showing an example of AR display corresponding to the operation target object.
Fig. 17 is an explanatory diagram showing another example of the AR display corresponding to the operation target object.
Fig. 18 is a diagram showing a configuration example of data stored by a storing section.
Fig. 19 is a flowchart for explaining processing for editing AR contents data.
Fig. 20 is a flowchart for explaining processing for downloading the AR contents data.
Figs. 21A and 21B are flowcharts for explaining processing for downloading the AR contents data.

### DESCRIPTION OF EXEMPLARY EMBODIMENTS

### System configuration

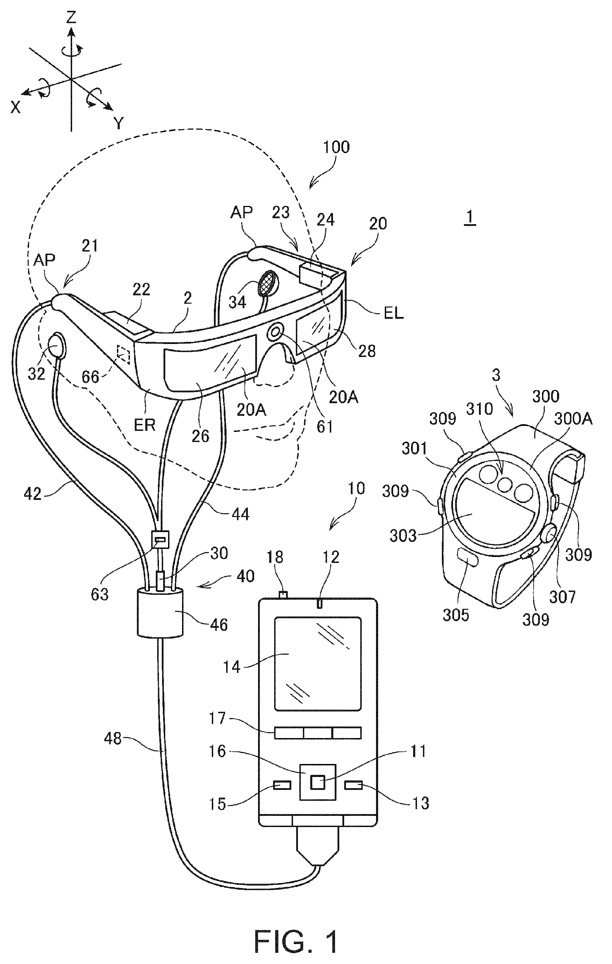

Fig. 1 is a diagram showing the schematic configuration of a display system 1 according to an embodiment applied with the invention.

The display system 1 includes a head-mounted display device 100 and an operation device 3 worn on the body of a user.

The head-mounted display device 100 includes, as shown in Fig. 1, an image display section 20 worn on the head of the user. The head-mounted display device 100 includes the image display section 20 (a display section) that causes the user to visually recognize a virtual image in a state in which the image display section 20 is worn on the head of the user and a control device 10 that controls the image display section 20. The image display section 20 is a wearing body worn on the head of the user. In this embodiment, the image display section 20 includes a frame 2 (a main body) of an eyeglass shape. The control device 10 also functions as a controller with which the user operates the head-mounted display device 100. The control device 10 is stored in a pocket of a jacket of the user or attached to a belt on the waist of the user.

The operation device 3 is a so-called wearable device that can be worn on the body of the user. In this embodiment, the operation device 3 has a shape of a wristwatch worn on the arm of the user.

### Configuration of the operation device

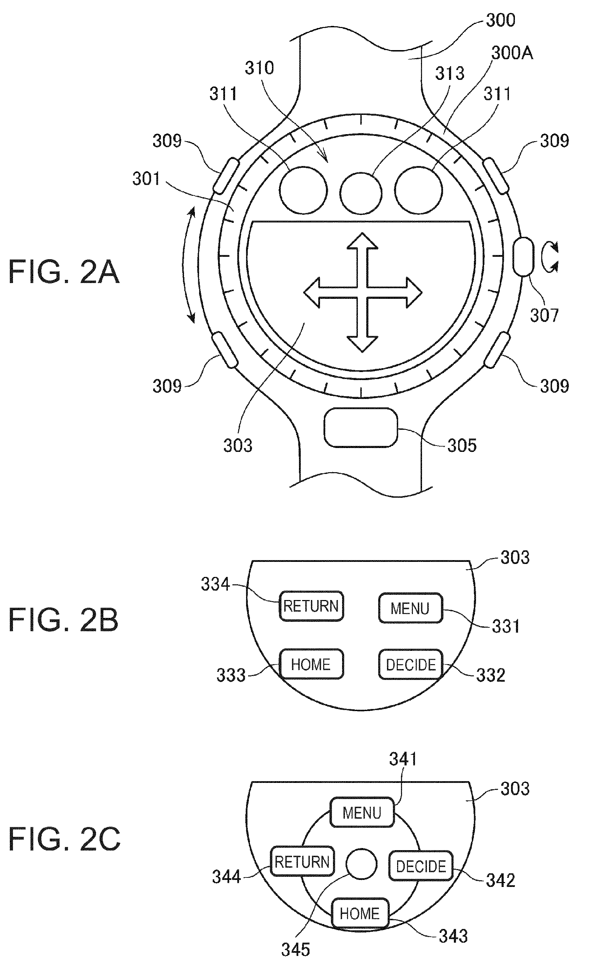

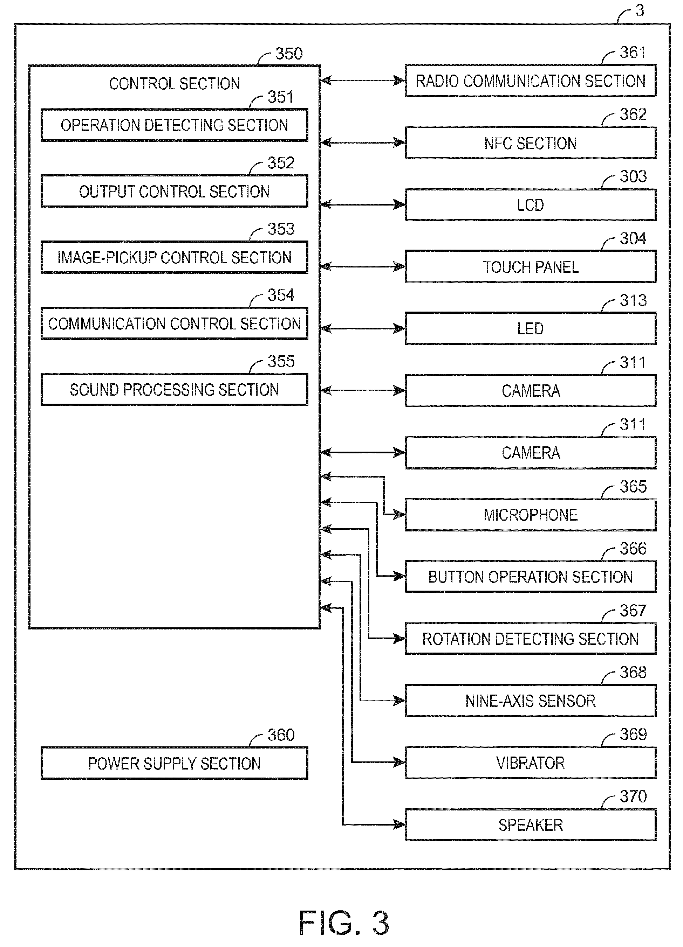

Figs. 2A to 2C are explanatory diagrams showing the configuration of the operation device 3. Fig. 2A is a main part front view of the operation device 3. Figs. 2B and 2C are diagrams showing display examples of an LCD 303. Fig. 3 is a functional block diagram of the operation device 3. The configuration of the operation device 3 is explained with reference to Figs. 1 to 3.

The operation device 3 includes a band section 300 having a shape same as the shape of a band of a wristwatch. The band section 300 includes a not-shown fixing section such as a buckle and can be wound around the front arm of the user and fixed. In the band section 300 of the operation device 3, a substantially disk-like plane section 300A is formed in a position corresponding to a dial of a watch. In the plane section 300A, a bezel 301, the LCD 303, a button 305, a winding crown-type operator 307, a plurality of buttons 309, and optical section 310 are provided.

The bezel 301 is a ring-shaped operator and is disposed at the peripheral edge portion of the plane section 300A. The bezel 301 is provided to be rotatable in the circumferential direction with respect to the band section 300. As explained below, the operation device 3 includes a mechanism for detecting a rotating direction and a rotation amount of the bezel 301. A mechanism for rotatably supporting the bezel 301 on the band section 300 may include a mechanism for generating notch sound according to the rotation.

The LCD 303 is an LCD (Liquid Crystal Display) that displays characters and images. A touch panel 304 (a touch operation section) shown in Fig. 3 is disposed to be superimposed on the surface of the LCD 303.

The button 305 is a push button-type switch disposed on the outer side of the bezel 301. For example, as shown in Figs. 1 and 2A, in a worn state, the button 305 is located below the bezel 301 viewed from the user. The button 305 is large compared with the winding crown-type operator 307 and the buttons 309 explained below and can be operated blindly.

The winding crown-type operator 307 is an operator having a shape simulating a winding crown of a wristwatch and can be rotated as indicated by an arrow in the figure. The operation device 3 includes a mechanism for detecting a rotating direction and a rotation amount of the winding crown-type operator 307 when the user rotates the winding crown-type operator 307. A mechanism for rotatably supporting the winding crown-type operator 307 on the band section 300 may include a mechanism for generating notch sound according to the rotation.

The buttons 309 are push button-type switches provided in the outer circumferential portion of the plane section 300A. The number of the buttons 309 is not particularly limited. In an example explained in this embodiment, four buttons 309 are provided.

Different functions can be allocated to the buttons 309. The functions allocated to the respective buttons 309 can be displayed on the LCD 303.

Fig. 2B shows an example in which the functions of the buttons 309 are displayed on the LCD 303. In this example, function indicators 331, 332, 333, and 334 respectively indicating the functions allocated to the four buttons 309 are displayed on the LCD 303. Display positions of the function indicators 331, 332, 333, and 334 correspond to the positions of the buttons 309, the functions of which are displayed. For example, the function indicator 331 displayed at the upper right part of the LCD 303 indicates the function allocated to the button 309 located at the upper right of the plane section 300A.

Further, functions selectable by rotating the bezel 301 can be displayed on the LCD 303. Fig. 2C shows an example in which functions allocated to operation of the bezel 301 are displayed on the LCD 303. In this example, function indicators 341, 342, 343, and 344 respectively indicating four functions selectable by rotating the bezel 301 are displayed on the LCD 303. Display positions of the function indicators 341, 342, 343, and 344 correspond to a rotating position of the bezel 301. That is, when the bezel 301 is rotated, the function indicators 341, 342, 343, and 344 are switched and selected in order. For example, when the bezel 301 is rotated clockwise (CW), the function indicators 341, 342, 343, and 344 are switched and selected in order.

A function indicator 345 indicates a function allocated to the button 305. In the example shown in Fig. 2C, the function is a "determination" function. When the button 305 is operated in a state in which any one of the function indicators 341, 342, 343, and 344 is selected according to the rotation of the bezel 301, the selection of the function indicators 341, 342, 343, and 344 is determined. The function selected by the rotation of the bezel 301 is executed.

The functions allocated to the buttons 309 and the functions to be selected by the rotation of the bezel 301 are not limited to single functions. A larger number of functions can be switched and allocated. In this case, the operation device 3 can be configured to be capable of switching the functions. In this case, the function indicators 331, 332, 333, and 334 or the function indicators 341, 342, 343, and 344 of the LCD 303 may be configured to be switched according to the switching of the functions.

The optical sections 310 include two cameras 311 (image pickup sections) and an LED 313. The camera 311 is a digital camera including an image pickup device such as a CCD or a CMOS and an image pickup lens. Image pickup ranges of the two cameras 311 included in the operation device 3 may be ranges different from each other or may be the same range. In this embodiment, the two cameras 311 pick up images of both the eyes of the user wearing the operation device 3. A line of sight of the user can be detected on the basis of the picked-up images. Therefore, one of the two cameras 311 is configured to be capable of picking up an image of the right eye of the user who views the plane section 300A in the front. The other is configured to be capable of picking up an image of the left eye.

The LED (Light Emitting Diode) 313 is an infrared LED that emits infrared light. The LED 313 is used as illumination when image pickup is performed by the cameras 311. The operation device 3 can transmit a light signal by lighting or flashing the LED 313.

The configuration of a control system of the operation device 3 is shown in Fig. 3.

The operation device 3 includes a control section 350 that controls the sections of the operation device 3. The control section 350 includes a CPU, a ROM, and a RAM not shown in the figure and executes a computer program stored in the ROM to thereby realize the function of the operation device 3.

The control section 350 includes, as functional sections for communication, a radio communication section 361 (a communication section) and an NFC (Near Field Communication) section 362. The radio communication section 361 executes radio data communication conforming one or more standards such as wireless LAN (WiFi (registered trademark)), Miracast (registered trademark), or Bluetooth (registered trademark). The NFC section 362 executes short-range wireless communication conforming to an NFC standard.

The LCD 303, the touch panel 304, the two cameras 311, and the LED 313 are connected to the control section 350. The control section 350 controls the LCD 303 to display images and characters. The touch panel 304 is disposed to be superimposed on the surface of the LCD 303. The touch panel 304 detects contact operation on the surface of the LCD 303. As the touch panel 304, for example, a sensor of a capacitance type or a pressure sensitive type can be used. The control section 350 detects contact operation using the touch panel 304 and specifies an operation position. The touch panel 304 may detect contact operation at one point or may be adapted to so-called multi-touch operation capable of simultaneously detecting operation at a plurality of points.

The control section 350 controls the respective two cameras 311 to execute image pickup and generates picked-up image data. The control section 350 turns on and off an electric current flowing to the LED 313 and lights or flashes the LED 313 at any timing.

A microphone 365, a button operation section 366, a rotation detecting section 367, a nine-axis sensor 368, a vibrator 369, and a speaker 370 are connected to the control section 350. The microphone 365 may be, for example, a monaural microphone, may be a stereo microphone, may be a microphone having directivity, or may be a nondirectional microphone. When the microphone 365 has directivity, the microphone 365 collects sound in the front direction of the plane section 300A, for example, in the plane section 300A (Fig. 2A) or in the vicinity of the plane section 300A. The microphone 365 may be a microphone of a bone conductivity type that is in contact with the body of the user. The control section 350 acquires an analog sound signal of sound collected by the microphone 365 and generates digital sound data.

The button operation section 366 detects operation of the button 305 and the buttons 309 and outputs an operation signal corresponding to an operated button to the control section 350. The rotation detecting section 367 detects rotation of the bezel 301 and rotation of the winding crown-type operator 307. The rotation detecting section 367 outputs a signal indicating a rotating direction and a rotation amount of the bezel 301 to the control section 350 and also outputs a signal indicating a rotating direction and a rotation amount of the winding crown-type operator 307 to the control section 350. The rotation detecting section 367 may output a signal indicating a rotating direction every time the bezel 301 rotates a predetermined amount. In this case, the control section 350 can acquire a rotation amount by counting the output signal of the rotation detecting section 367. The rotation detecting section 367 does not need to integrate the rotation amount. Concerning rotation operation of the winding crown-type operator 307, similarly, the rotation detecting section 367 may output a signal indicating a rotating direction every time the winding crown-type operator 307 rotates a predetermined amount.

The nine-axis sensor 368 is a unit including an inertial sensor. In this embodiment, the nine-axis sensor 368 includes a three-axis acceleration sensor, a three-axis angular velocity sensor, and a three-axis magnetic sensor. Axes on which the nine-axis sensor 368 performs detection can be set along, for example, an up-down direction and a left-right direction in a plane including the plane section 300A and a direction orthogonal to the plane including the plane section 300A.

The vibrator 369 includes a motor (not shown in the figure) that rotates according to control by the control section 350. A weight is eccentrically attached to a rotating shaft of the motor. The weight vibrates the operation device 3 according to the rotation of the motor. The speaker 370 outputs sound on the basis of a sound signal output by the control section 350.

Electric power is supplied to the sections of the operation device 3 including the control section 350 from a power supply section 360 including a primary battery or a secondary battery. The power supply section 360 may include, together with the secondary battery, a circuit that controls charging to the secondary battery.

The control section 350 executes a computer program to thereby realize functions of an operation detecting section 351, an output control section 352, an image-pickup control section 353, a communication control section 354, and a sound processing section 355.

The operation detecting section 351 detects, on the basis of signals input from the button operation section 366 and the rotation detecting section 367, operation of an operator included in the operation device 3 and specifies operation content. Specifically, the operation detection section 351 detects operation of the button 305, the winding crown-type operator 307, the bezel 301 and the buttons 309. The operation detection section 351 detects operation such as shaking or moving of the operation device 3 on the basis of a signal input from the nine-axis sensor 368. Further, the operation detecting section 351 detects contact operation on the LCD 303 on the basis of a signal input from the touch panel 304 and specifies an operation position. The operation detecting section 351 is also capable of specifying a function allocated to the operation position by specifying an image displayed by the LCD 303 in the operation position.

The output control section 352 executes an output according to data received by the communication control section 354 with the radio communication section 361 and the NFC section 362 or operation detected by the operation detecting section 351. The output control section 352 displays characters and images on the LCD 303. The output control section 352 causes the motor of the vibrator 369 to operate and vibrates the operation device 3.

The image-pickup control section 353 controls the cameras 311 to execute image pickup and acquires picked-up image data.

The communication control section 354 transmits and receives data to and from an external apparatus with the radio communication section 361 or the NFC section 362. The communication control section 354 can execute, with the radio communication section 361, data communication with the head-mounted display device 100. When detecting an apparatus capable of performing proximity communication, the communication control section 354 transmits and receives data to and from the apparatus with the NFC section 362. The communication control section 354 can flash the LED 313 and transmit data with a light signal. In this case, the communication control section 354 may be configured to detect and receive the light signal with the cameras 311.

The sound processing section 355 generates digital sound data of sound collected by the microphone 365 and, when necessary, performs an analysis of the digital sound data. For example, when the sound processing section 355 analyzes voice of the user collected by the microphone 365 and detects voice for instructing operation, the sound processing section 355 may outputs the instruction for operation to the operation detecting section 351. In this case, the user can operate the operation device 3 with voice. The sound processing section 355 outputs a sound signal to the speaker 370 and causes the speaker 370 to output sound.

The control section 350 can execute, as an operation mode of the operation device 3, a plurality of operation modes including a clock mode and a UI mode. The clock mode is an operation mode for clocking the present time with the control section 350 and displaying the present time on the LCD 303. In the clock mode, since the clock mode is an operation mode for causing the operation device 3 to operate as a clock, there is an advantage that power consumption is small. The UI mode is an operation mode for causing the operation device 3 to function as a user interface (UI) that operates the head-mounted display device 100. In the UI mode, the operation device 3 transmits data to the head-mounted display device 100 on the basis of operation on the operation device 3. The head-mounted display device 100 operates according to the data. Switching from the clock mode to the UI mode and switching from the UI mode to the clock mode are performed according to control by the control section 350 as explained below.

### Configuration of the head-mounted display device

In the head-mounted display device 100, the frame 2 of the image display section 20 includes a right holding section 21 and a left holding section 23. The right holding section 21 is a member provided to extend from an end portion ER, which is the other end of a right optical-image display section 26, to a position corresponding to the temporal region of the user when the user wears the image display section 20. Similarly, the left holding section 23 is a member provided to extend from an end portion EL, which is the other end of a left optical-image display section 28, to a position corresponding to the temporal region of the user when the user wears the image display section 20. The right holding section 21 is in contact with the right ear or the vicinity of the right ear in the head of the user and the left holding section 23 is in contact with the left ear of the user or the vicinity of the left ear. The right holding section 21 and the left holding section 23 hold the image display section 20 on the head of the user.

In the frame 2, the right holding section 21, a right display driving section 22, the left holding section 23, a left display driving section 24, a right optical-image display section 26, a left optical-image display section 28, a camera 61 (an image pickup section), and a microphone 63 are provided.

The right optical-image display section 26 and the left optical-image display section 28 are respectively disposed to be located in front of the right and left eyes of the user when the user wears the image display section 20. One end of the right optical-image display section 26 and one end of the left optical-image display section 28 are coupled to each other in a position corresponding to the middle of the forehead of the user when the user wears the image display section 20.

The right holding section 21 is a member provided to extend from an end portion ER, which is the other end of the right optical-image display section 26, to a position corresponding to the temporal region of the user when the user wears the image display section 20. Similarly, the left holding section 23 is a member provided to extend from an end portion EL, which is the other end of the left optical-image display section 28, to a position corresponding to the temporal region of the user when the user wears the image display section 20. The right holding section 21 and the left holding section 23 hold the image display section 20 on the head of the user like temples of eyeglasses.

The right display driving section 22 and the left display driving section 24 are disposed on sides opposed to the head of the user when the user wears the image display section 20. Note that the right display driving section 22 and the left display driving section 24 are collectively simply referred to as "display driving sections" as well. The right optical-image display section 26 and the left optical-image display section 28 are collectively simply referred to as "optical-image display sections" as well.

The display driving sections 22 and 24 include liquid crystal displays 241 and 242 (hereinafter referred to as "LCDs 241 and 242") and projection optical systems 251 and 252.

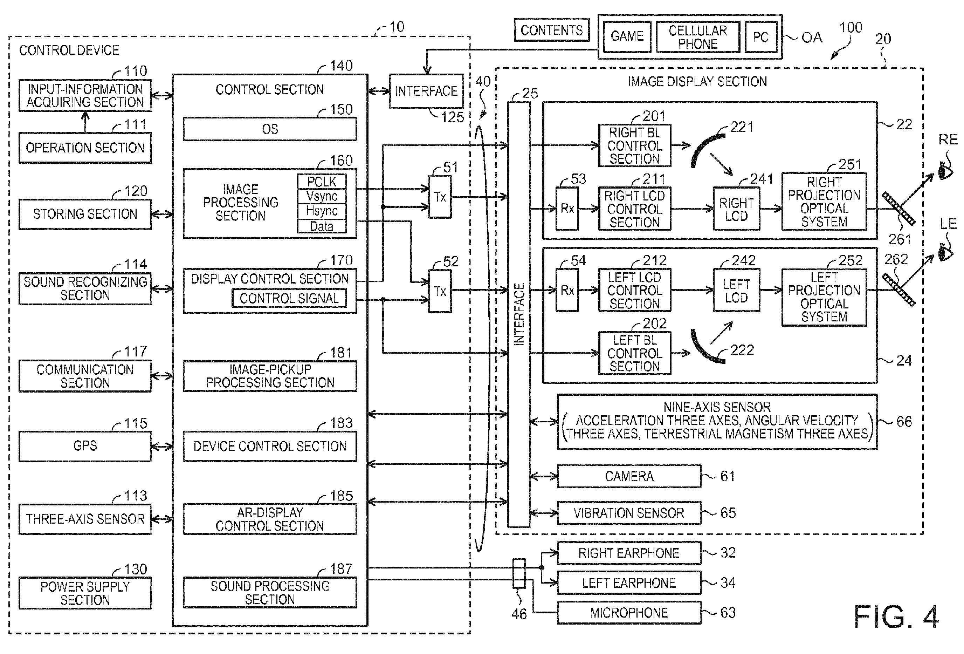

The right optical-image display section 26 and the left optical-image display section 28 include light guide plates 261 and 262 (Fig. 4) and dimming plates 20A. The light guide plates 261 and 262 are formed of light-transmissive resin or the like and guide image lights output by the display driving sections 22 and 24 to the eyes of the user. The dimming plates 20A are thin plate-like optical elements and are disposed to cover the front side of the image display section 20, which is a side opposite to the side of the eyes of the user. As the dimming plates 20A, various dimming plates such as a dimming plate having almost no light transmissivity, a dimming plate nearly transparent, a dimming plate that attenuates a light amount and transmits light, and a dimming plate that attenuates or reflects light having a specific wavelength can be used. By selecting optical characteristics (light transmittance, etc.) of the dimming plates 20A as appropriate, it is possible to adjust an external light amount made incident on the right optical-image display section 26 and the left optical-image display section 28 from the outside and adjust easiness of visual recognition of a virtual image. In this embodiment, the dimming plates 20A at least having light transmissivity enough for enabling the user wearing the head-mounted display device 100 to visually recognize an outside scene is used. The dimming plates 20A protect the right light guide plate 261 and the left light guide plate 262 and suppress damage, adhesion of stain, and the like to the right light guide plate 261 and the left light guide plate 262.

The dimming plates 20A may be detachably attachable to the right optical-image display section 26 and the left optical-image display section 28. A plurality of kinds of dimming plates 20A may be replaceable and attachable. The dimming plates 20A may be omitted.

The head-mounted display device 100 superimposes image light of an image processed on the inside and external light and makes the image light and the external light incident on the eyes of the user. For the user, the outside scene is seen through the dimming plate 20A. The image by the image light is visually recognized over the outside scene. In this case, the head-mounted display device 100 functions as a display device of a see-through type.

The camera 61 is disposed in a boundary portion between the right optical-image display section 26 and the left optical-image display section 28. In a state in which the user wears the image display section 20, the position of the camera 61 is substantially the middle of both the eyes of the user in the horizontal direction and is above both the eyes of the user in the vertical direction. The camera 61 is a digital camera including an image pickup device such as a CCD or a CMOS and an image pickup lens and may be either a monocular camera or a stereo camera.

The camera 61 picks up an image of at least a part of an outside scene in a front side direction of the head-mounted display device 100, in other words, in a visual field direction of the user in a state in which the head-mounted display device 100 is mounted. The breadth of an angle of view of the camera 61 can be set as appropriate. However, an image pickup range of the camera 61 is desirably a range including an outside world that the user visually recognizes through the right optical-image display section 26 and the left optical-image display section 28. Further, the image pickup range of the camera 61 is more desirably set such that an image of the entire visual field of the user through the dimming plates 20A can be picked up.

The camera 61 executes the image pickup according to control by a control section 140 (Fig. 4) and outputs picked-up image data to the control section 140.

The image display section 20 is connected to the control device 10 via a connecting section 40. The connecting section 40 includes a main body cord 48 connected to the control device 10, a right cord 42, a left cord 44, and a coupling member 46. The right cord 42 and the left cord 44 are two cords branching from the main body cord 48. The right cord 42 is inserted into a housing of the right holding section 21 from a distal end portion AP in an extending direction of the right holding section 21 and connected to the right display driving section 22. Similarly, the left cord 44 is inserted into a housing of the left holding section 23 from a distal end portion AP in an extending direction of the left holding section 23 and connected to the left display driving section 24.

The coupling member 46 is provided at a branching point of the main body cord 48 and the right and left cords 42 and 44 and includes a jack for connecting an earphone plug 30. A right earphone 32 and a left earphone 34 extend from the earphone plug 30. The microphone 63 is provided in the vicinity of the earphone plug 30. Cords between the earphone plug 30 and the microphone 63 are collected as one cord. Cords branch from the microphone 63 and are respectively connected to the right earphone 32 and the left earphone 34.

For example, as shown in Fig. 1, the microphone 63 is disposed to direct a sound collecting section of the microphone 63 to a visual line direction of the user. The microphone 63 collects sound and outputs a sound signal to a sound processing section 187 (Fig. 4). The microphone 63 may be, for example, a monaural microphone or a stereo microphone, may be a microphone having directivity, or may be a nondirectional microphone.

The right cord 42, the left cord 44, and the main body cord 48 only have to be cords capable of transmitting digital data and can be configured by, for example, a metal cable or an optical fiber. The right cord 42 and the left cord 44 may be collected as one cord.

The image display section 20 and the control device 10 transmit various signals via the connecting section 40. Connectors (not shown in the figure), which fit with each other, are respectively provided at an end portion on the opposite side of the coupling member 46 in the main body cord 48 and in the control device 10. The control device 10 and the image display section 20 can be connected and disconnected by fitting and unfitting the connector of the main body cord 48 and the connector of the control device 10.

The control device 10 controls the head-mounted display device 100. The control device 10 includes a determination key 11, a lighting section 12, a display switching key 13, a luminance switching key 15, a direction key 16, a menu key 17, and switches including a power switch 18. The control device 10 includes a track pad 14 operated by the user with a finger.

The determination key 11 detects depression operation and outputs a signal for determining content of the operation in the control device 10. The lighting section 12 includes a light source such as an LED and notifies an operation state (e.g., ON/OFF of a power supply) of the head-mounted display device 100 according to a lighting state of the light source. The display switching key 13 outputs, according to the depression operation, for example, a signal for instructing switching of a display mode of an image.

The track pad 14 includes an operation surface for detecting contact operation and outputs an operation signal according to operation on the operation surface. A detection system on the operation surface is not limited. An electrostatic system, a pressure detection system, an optical system, and the like can be adopted. The luminance switching key 15 outputs, according to the depression operation, a signal for instructing an increase or a reduction of the luminance of the image display section 20. The direction key 16 outputs an operation signal according to depression operation on the key corresponding to the upward, downward, left, and right directions. The power switch 18 is a switch for switching power ON/OF of the head-mounted display device 100.

Fig. 4 is a functional block diagram of the sections configuring the head-mounted display device 100.

The head-mounted display device 100 includes an interface 125 that connects various external apparatuses OA functioning as supply sources of contents. As the interface 125, an interface adapted to wired connection such as a USB interface, a micro USB interface, or an interface for a memory card can be used. The interface 125 may be configured by a wireless communication interface. The external apparatus OA is an image supply apparatus that supplies an image to the head-mounted display device 100. As the external apparatus OA, a personal computer (PC), a cellular phone, a portable game machine, or the like is used.

The control device 10 includes the control section 140, an input-information acquiring section 110, a storing section 120, and a transmitting section (Tx) 51 and a transmitting section (Tx) 52.

The input-information acquiring section 110 is connected to an operation section 111. The operation section 111 is connected to operators of the control device 10, detects operation of the operators, and outputs an operation signal corresponding to the detected operator to the input-information acquiring section 110. The input-information acquiring section 110 acquires, on the basis of a signal input from the operation section 111, input content input according to control by the control device 10.

The storing section 120 is a nonvolatile storage device and stores various computer programs and data related to the computer programs. The storing section 120 may store data of a still image and a moving image displayed on the image display section 20.

The control device 10 includes a power supply section 130 including a primary battery or a secondary battery and supplies electric power to the sections of the control device 10 and the image display section 20 from the power supply section 130.

A three-axis sensor 113, a sound recognizing section 114, a GPS 115, and a communication section 117 are connected to the control section 140. The three-axis sensor 113 is a three-axis acceleration sensor. The control section 140 acquires a detection value of the three-axis sensor 113. The GPS 115 includes an antenna (not shown in the figure), receives a GPS (Global Positioning System) signal, and calculates the present position of the control device 10. The GPS 115 outputs the present position and the present time calculated on the basis of the GPS signal to the control section 140. The GPS 115 may include a function of acquiring the present time on the basis of information included in the GPS signal and correcting time clocked by the control section 140.

The communication section 117 executes wireless data communication conforming to one or more standards such as wireless LAN (WiFi (registered trademark)), Miracast (registered trademark), or Bluetooth (registered trademark).

When the external apparatus OA is wirelessly connected to the communication section 117 by radio, the control section 140 acquires content data with the communication section 117 and causes the image display section 20 to display an image. On the other hand, when the external apparatus OA is connected to the interface 125 by wire, the control section 140 acquires content data with the interface 125 and causes the image display section 20 to display an image. The communication section 117 and the interface 125 function as a data acquiring section DA that acquires content data from the external apparatus OA.

The control section 140 includes a CPU (not shown in the figure) that executes a computer program, a RAM (not shown in the figure) that temporarily stores the computer program executed by the CPU and data, and a ROM (not shown in the figure) that stores, in a nonvolatile manner, a basic control program executed by the CPU and data. The control section 140 executes a control program with the CPU to control the sections of the head-mounted display device 100. The control section 140 is equivalent to a computer that reads out and executes a computer program stored by the storing section 120 and realizes various functions of the control section 140. The control section 140 functions as an operating system (OS) 150, an image processing section 160, a display control section 170, an image-pickup processing section 181, a device control section 183, an AR-display control section 185, and a sound processing section 187.

The image processing section 160 acquires an image signal included in content. The image processing section 160 separates synchronization signals such as a vertical synchronization signal VSync and a horizontal synchronization signal HSync from the acquired image signal. The image processing section 160 generates a clock signal PCLK using a PLL (Phase Locked Loop) circuit or the like (not shown in the figure) according to cycles of the vertical synchronization signal VSync and the horizontal synchronization signal HSync separated from the image signal. The image processing section 160 converts an analog signal, from which the synchronization signals are separated, into a digital image signal using an A/D conversion circuit or the like (not shown in the figure). The image processing section 160 stores the digital image signal after the conversion in the RAM of the control section 140 frame by frame as image data (in the figure, Data) of a target image. The image data is, for example, RGB data.

Note that the image processing section 160 may perform, according to necessity, resolution conversion processing for converting the resolution of the image data into resolution suitable for the right display driving section 22 and the left display driving section 24. The image processing section 160 may execute, for example, image adjustment processing for adjusting luminance and chroma of the image data and 2D/3D conversion processing for creating 2D image data from 3D image data or creating 3D image data from 2D image data.

The image processing section 160 transmits the clock signal PCLK, the vertical synchronization signal VSync, the horizontal synchronization signal HSync, and the image data Data stored in the RAM via the transmitting sections 51 and 52. The transmitting sections 51 and 52 function as a transceiver and execute serial transmission between the control device 10 and the image display section 20. Note that the image data Data transmitted via the transmitting section 51 is referred to as "image data for right eye" and the image data Data transmitted via the transmitting section 52 is referred to as "image data for left eye".

The display control section 170 generates a control signal for controlling the right display driving section 22 and the left display driving section 24 and controls, according to the control signal, generation and emission of image lights respectively by the right display driving section 22 and the left display driving section 24. Specifically, the display control section 170 controls driving ON/OFF of a right LCD 241 by a right LCD control section 211 and driving ON/OFF of a right backlight 221 by a right backlight control section 201. The display control section 170 controls driving ON/OFF of a left LCD 242 by a left LCD control section 212 and driving ON/OFF of a left backlight 222 by a left backlight control section 202.

The sound processing section 187 acquires a sound signal included in contents, amplifies the acquired sound signal, and outputs the sound signal to the right earphone 32 and the left earphone 34. The sound processing section 187 acquires sound collected by the microphone 63 and converts the sound into digital sound data. The sound processing section 187 may perform processing set in advance on the digital sound data.

The image display section 20 includes an interface 25, the right display driving section 22, the left display driving section 24, the right light guide plate 261 functioning as the right optical-image display section 26, the left light guide plate 262 functioning as the left optical-image display section 28, the camera 61, a vibration sensor 65, and a nine-axis sensor 66.

The vibration sensor 65 is configured using an acceleration sensor. For example, the vibration sensor 65 can be incorporated in the vicinity of the end portion ER of the right optical-image display section 26 in the right holding section 21 shown in Fig. 1. When the user performs operation for knocking the end portion ER (knock operation), the vibration sensor 65 detects vibration due to the operation and outputs a detection result to the control section 140. The control section 140 detects the knock operation by the user according to the detection result of the vibration sensor 65.

The nine-axis sensor 66 is a motion sensor that detects acceleration (three axes), angular velocity (three axes), and terrestrial magnetism (three axes). When the image display section 20 is worn on the head of the user, the control section 140 detects a movement of the head of the user on the basis of detection values of the nine-axis sensor 66. For example, the control section 140 can estimate the magnitude and the direction of a tilt of the image display section 20 on the basis of the detection values of the nine-axis sensor 66.

Detection axes of an acceleration sensor and an angular velocity sensor incorporated in the nine-axis sensor 66 can be set as, for example, three axes of X, Y, and Z shown in Fig. 1. In this example, the left-right direction is represented as the X axis, the front-back direction is represented the a Y axis, and the up-down direction is represented as the Z axis with respect to the head of the user wearing the image display section 20. More specifically, in the worn state of the head-mounted display device 100, the image display section 20 is present in a horizontal position sensed by the user with respect to the left and right eyes. In a standard wearing position of the head-mounted display device 100, the detection axes (the X axis, the Y axis, and the Z axis) of the nine-axis sensor 66 coincide with left and right, front and back, and up and down sensed by the user. The acceleration sensor of the nine-axis sensor 66 detects accelerations in the X-axis direction, the Y-axis direction, and the Z-axis direction. An angular velocity sensor included in the nine-axis sensor 66 detects rotation around the X axis (a pitch), rotation around the Y axis (a yaw), and rotation around the Z axis (a roll).

The interface 25 includes a connector to which the right cord 42 and the left cord 44 are connected. The interface 25 outputs the clock signal PCLK, the vertical synchronization signal VSync, the horizontal synchronization signal HSync, and the image data Data transmitted from the transmitting section 51 to receiving sections (Rxs) 53 and 54 corresponding to the interface 25. The interface 25 outputs a control signal transmitted from the display control section 170 to the receiving sections 53 and 54, the right backlight control section 201, and the left backlight control section 202 corresponding to the interface 25.

The interface 25 is an interface that connects the camera 61, the vibration sensor 65, and the nine-axis sensor 66. A detection result of vibration by the vibration sensor 65 and a detection result of acceleration (three axes), angular velocity (three axes), and terrestrial magnetism (three axes) by the nine-axis sensor 66 are sent to the control section 140 via the interface 25.

The right display driving section 22 includes the right backlight 221, the right LCD 241, and the right projection optical system 251 explained above. The right display driving section 22 includes the receiving section 53, the right backlight (BL) control section 201 that controls the right backlight (BL) 221, and the right LCD control section 211 that drives the right LCD 241.

The receiving section 53 operates as a receiver corresponding to the transmitting section 51 and executes serial transmission between the control device 10 and the image display section 20. The right backlight control section 201 drives the right backlight 221 on the basis of an input control signal. The right LCD control section 211 drives the right LCD 241 on the basis of the clock signal PCLK, the vertical synchronization signal VSync, the horizontal synchronization signal HSync, and the image data for right eye Data input via the receiving section 53.

The left display driving section 24 includes a configuration same as the configuration of the right display driving section 22. The left display driving section 24 includes the left backlight 222, the left LCD 242, and the left projection optical system 252 explained above. The left display driving section 24 includes the receiving section 54, the left backlight control section 202 that drives the left backlight 222, and the left LCD control section 212 that drives the left LCD 242.

The receiving section 54 operates as a receiver corresponding to the transmitting section 52 and executes serial transmission between the control device 10 and the image display section 20. The left backlight control section 202 drives the left backlight 222 on the basis of an input control signal. The left LCD control section 212 drives the left LCD 242 on the basis of the clock signal PCLK, the vertical synchronization signal VSync, the horizontal synchronization signal HSync, and the image data for left eye Data. Note that the right backlight control section 201, the right LCD control section 211, the right backlight 221, and the right LCD 241 are collectively referred to as "right image-light generating section" as well. Similarly, the left backlight control section 202, the left LCD control section 212, the left backlight 222, and the left LCD 242 are collectively referred to as left "image-light generating section" as well.

The image-pickup processing section 181 controls the camera 61 to execute image pickup and acquires picked-up image data.

The device control section 183 controls the communication section 117 to perform data communication with the operation device 3 and analyzes data received from the operation device 3. When a flashing pattern of the LED 313 included in the operation device 3 corresponds to a specific pattern, the device control section 183 decodes the pattern on the basis of the picked-up image data of the camera 61 and receives the data.

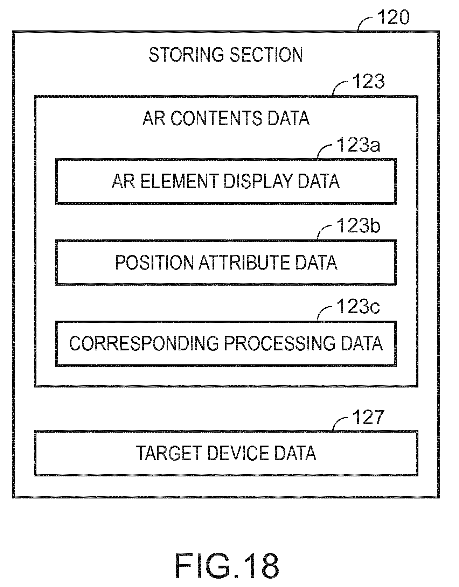

The AR-display control section 185 controls the image processing section 160 and the display control section 170 on the basis of data of AR contents to cause the image display section 20 to display an image for AR display. For example, the storing section 120 stores the data of the AR contents. When AR contents data 123 (see Fig. 18) include sound data, the AR-display control section 185 controls the sound processing section 187 to output sound of content from the right earphone 32 and the left earphone 34.

The AR-display control section 185 displays the AR contents in a state in which the user views a target object through the image display section 20. The AR-display control section 185 performs the AR display for displaying an image, characters, and the like in a position corresponding to the target object to provide information concerning the target object or changes an appearance of a figure of the target object seen through the image display section 20. The AR contents include data of the image and the characters displayed in the position corresponding to the target object. The AR contents may include data for specifying the target object and data concerning the display position of the image and the characters. The display position of the AR contents may be a position overlapping the target object or may be around the target object. The target object only has to be an object and may be an immovable body such as a building, may be a mobile body such as an automobile or a train, or may be an organism such as a human or an animal. The AR-display control section 185 detects a target object located in the visual field of the user from the picked-up image data acquired by the image-pickup processing section 181. The AR-display control section 185 determines a display position of AR contents corresponding to the detected target object and displays the AR contents.

The AR contents are desirably displayed to overlap a position where the user visually recognizes the target object or to match the position where the user visually recognizes the target object. Therefore, the AR-display control section 185 detects an image of the target object from the picked-up image data of the image-pickup processing section 181 and specifies the position of the target object in the image pickup range of the camera 61 on the basis of a positional relation between the detected image of the target object and the entire picked-up image. The AR-display control section 185 determines a display position of the AR contents corresponding to the position of the target object on the basis of a positional relation between the image pickup range of the camera 61 and a display region of the image display section 20.

The sound processing section 187 acquires a sound signal included in content, amplifies the acquired sound signal, and outputs the sound signal to the right earphone 32 and the left earphone 34. The sound processing section 187 acquires sound collected by the microphone 63 and converts the sound into digital sound data. The sound processing section 187 may perform processing set in advance on the digital sound data.

### Operation of the display system

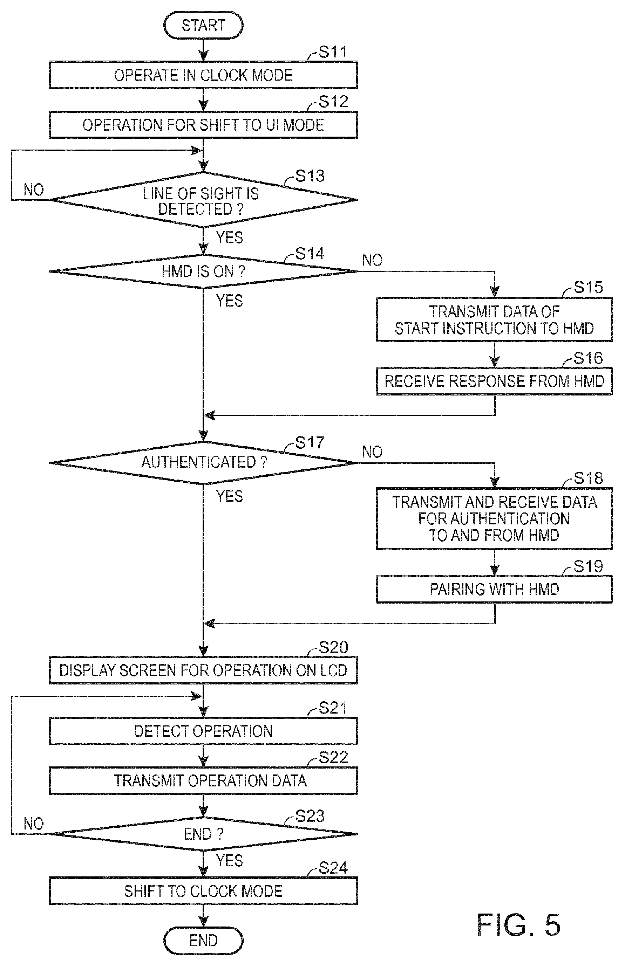

Fig. 5 is a flowchart for explaining the operation of the display system 1 and shows, in particular, the operation of the operation device 3.

The operation device 3 operates in a clock mode while operation of the display system 1 is not performed (step S11). In the clock mode, when operation for instructing a shift to the UI mode is performed (step S12), the control section 350 of the operation device 3 executes image pickup with the cameras 311 and detects a line of sight of the user (step S13). The control section 350 performs the image pickup and an analysis of a picked-up image until a line of sight is detected (NO in step S13).

If a line of sight is detected (YES in step S13), the control section 350 determines whether the head-mounted display device 100 is on (step S14). In step S14, for example, the control section 350 performs, with the radio communication section 361, communication with the communication section 117 of the head-mounted display device 100 and detects an operation state of the head-mounted display device 100 to perform the determination. For example, the control section 350 may execute the image pickup with the cameras 311 according to control by the image-pickup control section 353 and determine an operation state of the head-mounted display device 100 on the basis of a picked-up image. For example, when an image displayed by the image display section 20 is transmitted through the dimming plate 20A and projected on the picked-up image, the control section 350 may determine that the head-mounted display device 100 is on. A light emitting section that emits light according to an operation state may be provided in the image display section 20. A light emission state of the light emitting section may be specified from the picked-up image to determine the operation state.

If determining that the head-mounted display device 100 is not on (NO in step S14), the control section 350 executes communication using the radio communication section 361 and transmits data for instructing a start to the head-mounted display device 100 (step S15). The control section 350 receives control data indicating the start from the head-mounted display device 100 and shifts to step S17. If determining that the head-mounted display device 100 is on (YES in step S14), the control section 350 shifts to step S17.

In step S17, the control section 350 determines whether authentication of the head-mounted display device 100 has been performed. When being used in combination with the head-mounted display device 100, the control section 350 performs the authentication of the head-mounted display device 100 and operates as a user interface of the head-mounted display device 100 that succeeds in the authentication. If determining that the authentication has not been performed (NO in step S17), the control section 350 transmits and receives data for authentication to and from the head-mounted display device 100, which is determined in step S14 as to whether the head-mounted display device 100 is on, and authenticates the head-mounted display device 100 (step S18). When the data necessary for the authentication is transmitted and received, the control section 350 performs pairing with the head-mounted display device 100, that is, one-to-one association for operating as the user interface (step S19) and shifts to step S20. The association may be one-to-many. If the authentication of the head-mounted display device 100 has been performed (YES in step S17), the control section 350 shifts to step S20.

In step S20, the control section 350 displays a screen for operation on the LCD 303 and stands by for operation. The screen for operation is, for example, screens illustrated in Figs. 2B and 2C.

When the control section 350 stands by for operation and detects operation with the operation detecting section 351 (step S21), the control section 350 transmits operation data indicating the detected operation to the head-mounted display device 100 (step S22).

Thereafter, the control section 350 determines whether an end condition is satisfied (step S23). If the end condition is satisfied (YES in step S23), the control section 350 shifts to the clock mode (step S24) and ends the processing. If the end condition is not satisfied (NO in step S23), the control section 350 returns to step S21.

The end condition is that, for example, operation for instructing an end of the UI mode is performed by the touch panel 304, the button 305, the bezel 301, the winding crown-type operator 307, or the plurality of buttons 309 or control data for instructing the end is received from the head-mounted display device 100.

In the display system 1, the head-mounted display device 100 can display an AR image corresponding to operation by the operation device 3.

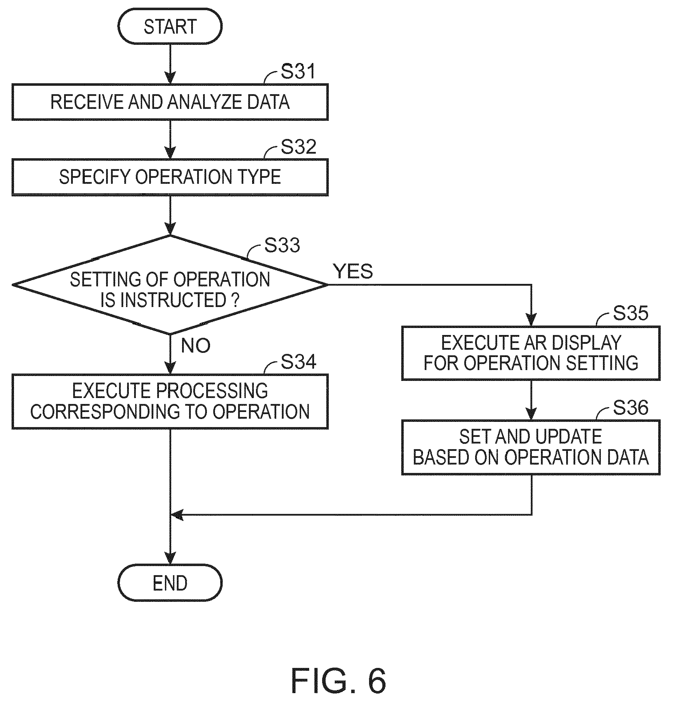

Fig. 6 is a flowchart for explaining the operation of the head-mounted display device 100 and shows, in particular, an operation for performing AR display corresponding to the operation device 3.

The control section 140 receives, with the communication section 117, operation data transmitted by the operation device 3 and analyzes the operation data with the device control section 183 (step S31) and specifies a type of operation (step S32). The data received in step S31 is operation data transmitted by the operation device 3 according to the operation (step S22 in Fig. 5). The device control section 183 determines whether an instruction corresponding to the operation indicated by the operation data is an instruction concerning setting of operation of the operation device 3 (step S33). If the instruction is an instruction for other than the setting of the operation (NO in step S33), the device control section 183 executes processing corresponding to the operation specified in step S32 (step S34) and ends the processing. In step S34, for example, the device control section 183 performs processing for starting image pickup of the camera 61 according to operation data for instructing an image pickup start or the AR display control section 185 starts or ends the AR display according to operation data for instructing a start or an end of the AR display.

On the other hand, if the instruction corresponding to the operation indicated by the operation data is the instruction concerning the setting of the operation (YES in step S33), the AR display control section 185 performs AR display for operation setting (step S35). When the operation device 3 transmits operation data according to operation in the operation device 3 during the AR display, the device control section 183 receives the operation data and performs setting and update of the setting on the basis of the received operation data.

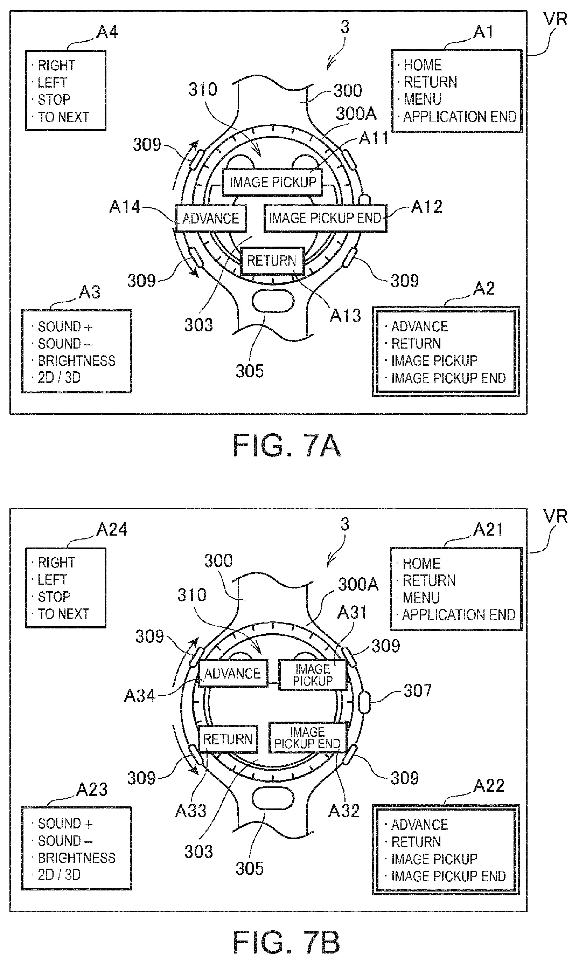

Figs. 7A and 7B show examples of the AR display for the operation setting. Fig. 7A shows an example of AR display for performing setting concerning operation of the bezel 301. Fig. 7B shows an example of AR display for performing setting concerning operation of the buttons 309.

In the example shown in Fig. 7A, the actual operation device 3 is visually recognized in a visual field VR of the user. AR contents are displayed in a position corresponding to the operation device 3 by the image display section 20. The AR contents are allocation candidate indicators A1, A2, A3, and A4 and setting candidates A11, A12, A13, and A14. The allocation candidate indicators A1, A2, A3, and A4 are images indicating candidates of functions allocated to rotation of the bezel 301 and, in this embodiment, include texts indicating combinations of functions selectable by operation for rotating the bezel 301. The allocation candidate indicator A1 includes four character strings (texts) of "Home", "Return", "Menu", and "Application end". The allocation candidate indicator A2 includes four character strings of "Advance", "Return", "Image pickup", and "Image pickup end". In the operation device 3, when the operation for rotating the bezel 301 is performed, any one of the allocation candidate indicators A1 to A4 can be selected in order.

In the example shown in Fig. 7A, the allocation candidate indicator A2 is selected. Therefore, the four character strings of "Advance", "Return", "Image pickup", and "Image pickup end" are disposed to overlap the operation device 3 seen in the center of the visual field VR. These character strings are candidates of functions to be allocated, that is, the setting candidates A11, A12, A13, and A14. When the allocation candidate indicator A2 is switched to another allocation candidate indicator according to the operation of the bezel 301, character strings of the setting candidates A11, A12, A13, and A14 are changed. Therefore, the user can select and set a function allocated to the rotation operation of the bezel 301 out of the allocation candidate indicators A1, A2, A3, and A4. When the button 305 is operated in the operation device 3, the allocation candidate indicator selected by the operation of the bezel 301 is decided and the setting is updated.

In the example shown in Fig. 7B, in a position corresponding to the actual operation device 3, allocation candidate indicators A21, A22, A23, and A24 and setting candidates A31, A32, A33, and A34 are displayed as AR contents. The allocation candidate indicators A21, A22, A23, and A24 are images indicating candidates of functions allocated to the four buttons 309 and, in this example, include texts indicating functions executed when the respective four buttons 309 are operated. The allocation candidate indicator A21 includes four character strings (texts) of "Home", "Return", "Menu", and "Application end". The allocation candidate indicator A22 include four character strings of "Advance", "Return", "Image pickup", and "Image pickup end". In the operation device 3, when the operation for rotating the bezel 301 is performed, any one of the allocation candidate indicators A21 to A24 can be selected in order.

In the example shown in Fig. 7B, the allocation candidate indicator A22 is selected. Therefore, the four character strings of "Advance", "Return", "Image pickup", and "Image pickup end" are disposed to overlap the operation device 3 seen in the center of the visual field VR. These character strings are candidates of functions to be allocated, that is, the setting candidates A31, A32, A33, and A34 and are displayed in positions corresponding to the buttons 309 for allocating functions. When the allocation candidate indicator A22 is switched to another allocation candidate indicator according to the operation of the bezel 301, character strings of the setting candidates A31, A32, A33, and A34 are changed. Therefore, the user can select and set a function allocated to the buttons out of the allocation candidate indicators A21, A22, A23, and A24 by rotation operation of the bezel 301. When the button 305 is operated in the operation device 3, the allocation candidate indicator selected by the operation of the bezel 301 is decided and the setting is updated.

The examples shown in Figs. 7A and 7B indicate operations for setting functions executed by the head-mounted display device 100 according to operation data transmitted by the operation device 3. Since allocation of functions can be set and updated, operation concerning various functions of the head-mounted display device 100 can be performed by the operation device 3. Setting can be easily performed by using AR display.

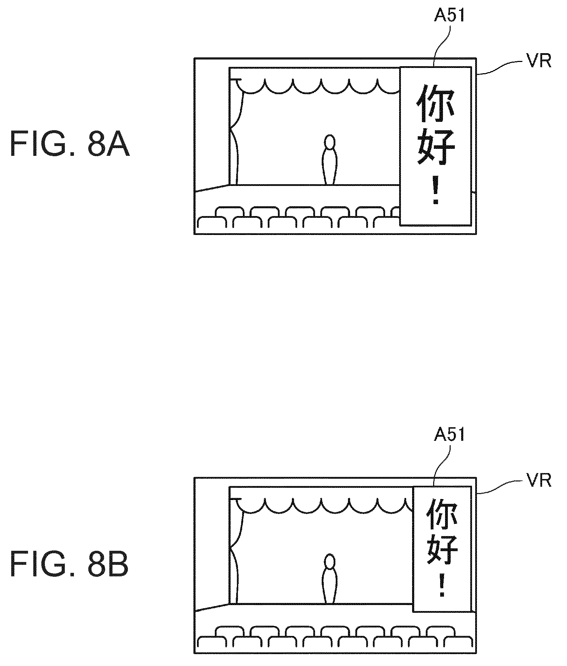

Figs. 8A and 8B are explanatory diagrams showing examples of operations executed by the head-mounted display device 100 according to operation of the operation device 3. In the examples shown in Figs. 8A and 8B, a display form of AR display displayed by the image display section 20 according to control by the AR-display control section 185 is changed according to operation of the operation device 3. Fig. 8A shows an example of the AR display by the image display section 20. Fig. 8B shows an example in which the display form of the AR display is changed.

In the example shown in Fig. 8A, a stage, a performer, and audience seats are seen in the visual field VR as an actual outside scene. In this example, a character string A51 related to a program being performed on the stage is displayed to overlap the actual outside scene. The character string A51 is, for example, a text indicating a speech on the stage and is AR-displayed in a position overlapping the stage.

The head-mounted display device 100 changes a display size of the character string A51 according to operation of the operation device 3 and, for example, as shown in Fig. 8B, reduces and displays the character string A51. In this operation, when the device control section 183 analyzes operation data transmitted by the operation device 3 and detects that operation equivalent to reduction of AR display is performed, the AR-display control section 185 changes the display size.

In the head-mounted display device 100, as explained with reference to Figs. 6 to 7B, an operation executed by the head-mounted display device 100 can be associated with the operation in the operation device 3. This association is not limited to the operation of the buttons 309 and the rotation operation of the bezel 301. For example, the association may be pressing operation of the button 305 and operation for rotating the winding crown-type operator 307. For example, the association may include operation for touching the touch panel 304 with a finger.

Specifically, a display image may be enlarged according to operation for turning the bezel 301 to the right and may be reduced according to operation for turning the bezel 301 to the left. The display image may be enlarged when contact of a finger with the center portion of the touch panel 304 is detected. The display image may be reduced when contact of a finger with a circumferential edge portion (e.g., the vicinity of a lower left frame) of the touch panel 304 is detected. When the finger in contact with the touch panel 304 is, for example, rotated to the right or to the left while being kept in contact, the display image may be rotated according to the rotation.

According to these kinds of operation, the head-mounted display device 100 may perform rotation, copying, page feeding, and the like irrespective of the enlargement or the reduction of an image (including characters) displayed on the image display section 20.

Further, the display device 3 can also transmit detection values of the nine-axis sensor 368 to the head-mounted display device 100. The operation device 3 may include a GPS detecting section and transmit the present position detected by the GPS detecting section to the head-mounted display device 100. In this case, the control section 140 can detect relative positions of the operation device 3 and the head-mounted display device 100 on the basis of a detection value received from the operation device 3 and a detection value of the three-axis sensor 113.

The control section 140 may perform changes of display such as enlargement, reduction, and rotation of the display image or may perform fade-in display and fade-out display of an image according to a movement of the operation device 3 or a change in the relative positions of the operation device 3 and the head-mounted display device 100. In this case, it is possible to change the display by bringing the operation device 3 close to or moving the operation device 3 away from the head-mounted display device 100.

The operation of the display system 1 is not limited to the example explained above. For example, operations explained below can be executed.

Operation for switching and selecting a plurality of candidates in order can be realized by operation for rotating the bezel 301 in the operation device 3. According to this operation, for example, when a file or a folder is selected, when a virtual key is selected in a virtual keyboard, the bezel 301 only has to be rotated. Since the bezel 301 can be intuitively operated and is located in the outer circumferential portion of the plane section 300A of the operation device 3, the bezel 301 can be operated blindly. Therefore, the user can operate the bezel 301 while directing attention to AR display displayed by the image display section 20. Further, since the selection can be decided by the button 305 provided in a position away from the plane section 300A and larger than the other operators of a switch type, it is possible to more easily perform operation. Since the position and the size of the button 305 are different from the positions and the sizes of the buttons 309 and the winding crown-type operator 307, like the bezel 301, the button 305 can be easily operated blindly. Therefore, it is possible to perform intuitive and sure operation while viewing an image displayed by the image display section 20.

The control section 140 may perform, according to the operation for rotating the bezel 301, an operation for transitioning a screen displayed by the image display section 20. It is conceivable to configure, like iOS (registered trademark) and Android (registered trademark), the operating system 150 of the head-mounted display device 100 to switch and transition a plurality of screens. In this case, it is possible to more effectively use the operation of the bezel 301 by transitioning the screen according to the operation for rotating the bezel 301.

In the operation for selecting one candidate from a plurality of candidates, instead of the operation of the bezel 301, selection by sound may be able to be performed. In this case, when a peculiar name, number, sign, or the like attached to a candidate is designated by sound, the operation device 3 may detect the sound with the microphone 365 and transmit data of the detected sound to the head-mounted display device 100. The control section 140 may perform setting.

It is also possible that the head-mounted display device 100 transmits control data to the operation device 3 and causes the operation device 3 to operate. For example, the device control section 183 of the control section 140 may transmit control data for instructing a detection start of the touch panel 304 and the nine-axis sensor 368 and a shift to a nondetection state. In this case, the head-mounted display device 100 can control execution/non-execution of sensing in the operation device 3 and can prevent wrong operation and exhaustion of the power supply section 360. The device control section 183 may transmit control data for instructing an image pickup start and an image pickup stop of the cameras 311. The device control section 183 may transmit control data for controlling lighting, extinction, and flashing of the LCD 303.

The operation device 3 can also perform an output based on data transmitted by the head-mounted display device 100. For example, the device control section 183 may transmit text data and image data with the communication section 117. The operation device 3 may display the text data and the image data received from the head-mounted display device 100 on the LCD 303. In this case, the operation device 3 causes the LCD 303 to display an operation state (a status) of the head-mounted display device 100. The user can easily grasp the operation state of the head-mounted display device 100. This is useful, for example, when the user desires to learn the operation state of the head-mounted display device 100 in a state in which the user does not wear the head-mounted display device 100. The operation device 3 may output sound from the speaker 370 or may move the vibrator 369 to generate vibration according to data received from the head-mounted display device 100.

Further, the device control section 183 can transmit, to the operation device 3, control data for instructing image pickup execution and transmission of picked-up image data. The operation device 3 can perform image pickup and display picked-up image data on the image display section 20. In this case, the operation device 3 can perform the image pickup from an angle at which the camera 61 included in the head-mounted display device 100 cannot perform image pickup. The operation device 3 can display a picked-up image on the image display section 20. The control section 140 may analyze picked-up image data of the picked-up image.

The display system 1 may read, with the NFC section 362 of the operation device 3, data recorded in a noncontact-type IC card or an RFID tag and transmit the read data from the radio communication section 361 to the communication section 117. In this case, for example, a balance of IC card-type electronic money can be displayed by the image display section 20.

In this way, in the display system 1, the head-mounted display device 100 of the see-through type and the operation device 3 of the watch type are combined. The head-mounted display device 100 is caused to operate according to the operation of the operation device 3. Consequently, it is possible to realize hands-free use except during the operation and operate the head-mounted display device 100 in a natural movement even during the operation. The operation device 3 can be used as a wristwatch when operating in the clock mode. The operation device 3 is used as a user interface for operation to make it possible to realize hands-free use except during the operation and operate the head-mounted display device 100 in a natural movement even during the operation. Information concerning the operation device 3 can be viewed according to the display of the image display section 20. Since it is unnecessary to directly view the LCD 303, there is also an advantage that it is unnecessary to use a hand to view the display of the LCD 303.

When the touch panel 304 is adapted to so-called multi-touch operation, an operation for enlarging, reducing, or rotating the display image of the head-mounted display device 100 may be performed according to, for example, operation for enlarging or reducing an interval among a plurality of operation points on the touch panel 304.

In the display system 1, the head-mounted display device 100 is capable of detecting a relative position of the head-mounted display device 100 with respect to the operation device 3. Various methods can be used for the position detection. In an example explained in this embodiment, the head-mounted display device 100 picks up an image of a range including the operation device 3 and specifies a relative position on the basis of picked-up image data.

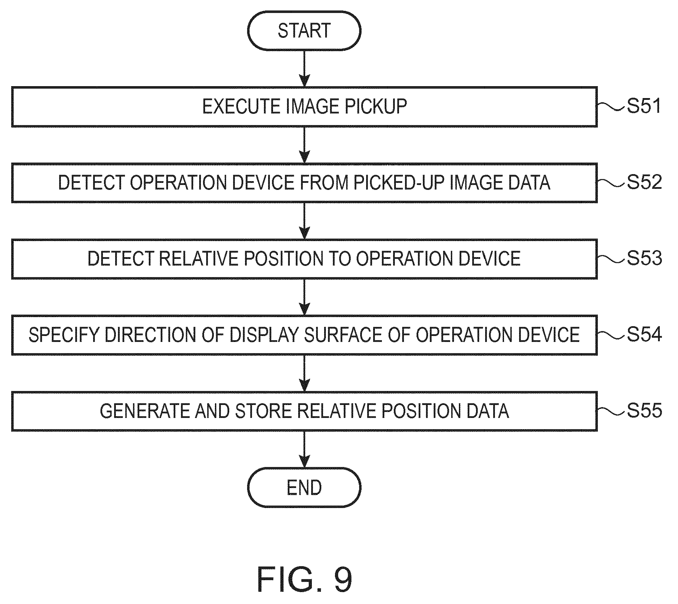

Fig. 9 is a flowchart for explaining the operation of the head-mounted display device 100 and shows, in particular, position detection processing for detecting relative positions of the head-mounted display device 100 and the operation device 3.

The control section 140 controls the camera 61 with the image-pickup processing section 181 and executes image pickup (step S51). The control section 140 acquires picked-up image data of the camera 61, analyzes the acquired picked-up image data, and detects an image of the operation device 3 (step S52). Consequently, in the picked-up image of the camera 61, it is possible to detect both a position of the operation device 3 and the shape of the image of the operation device 3.

Subsequently, the control section 140 calculates, on the basis of the position and the size of the image of the operation device 3 in the picked-up image, relative positions of the operation device 3 and the camera 61 (step S53). That is, the control section 140 calculates, from the position of the image of the operation device 3, the position of the operation device 3 with respect to the center axis of an angle of view of the camera 61, for example, an optical axis of the image pickup lens of the camera 61. The control section 140 calculates a distance between the operation device 3 and an image pickup surface of the camera 61 from the size of the image of the operation device 3 in the picked-up image. The control section 140 may perform the calculation using an image pickup condition (zoom magnification, etc.) of the camera 61.

In step S53, after calculating the relative positions of the camera 61 and the operation device 3, the control section 140 may convert the calculated relative positions into relative positions of the head-mounted display device 100 and the operation device 3.

The head-mounted display device 100 and the operation device 3 are large compared with coordinates in the picked-up image. Therefore, it is realistic to set reference points. That is, the relative positions of the head-mounted display device 100 and the operation device 3 are calculated as relative positions of a reference point set in the head-mounted display device 100 and a reference point set in the operation device 3. When the reference point in the head-mounted display device 100 is a point overlapping the optical axis on the image pickup surface of the camera 61, the relative positions calculated in step S53 are directly the relative positions of the operation device 3 and the head-mounted display device 100. When the reference point of the head-mounted display device 100 is present in a position different from the image pickup surface of the camera 61, the control section 140 only has to perform the conversion explained above. The reference point in the operation device 3 only has to be set in, for example, the center of the bezel 301.

The control section 140 specifies the direction of the LCD 303 of the operation device 3 on the basis of the shape of the image of the operation device 3 in the picked up image (step S54). In step S54, the control section 140 can calculate the direction on the basis of the shape of the bezel 301 of the operation device 3 in the picked-up image, the entire shape of the operation device 3 including the band section 300, or the shape of the LCD 303. For example, as shown in Fig. 2A, when the operation device 3 displays a figure such as an arrow on the LCD 303 or when the operation device 3 displays time on the LCD 303, the control section 140 may calculate the direction on the basis of a display image of the LCD 303.

Thereafter, the control section 140 generates data indicating the relative positions of the operation device 3 and the head-mounted display device 100 calculated in step S53 and data indicating the direction of the operation device 3 with respect to the head-mounted display device 100 specified in step S54. The control section 140 stores relative position data including the generated data in the storing section 120 (step S55).

For example, in the operation shown in step S35 in Fig. 6, the AR-display control section 185 displays the AR contents to be seen overlapping the operation device 3 in a state in which the user of the head-mounted display device 100 is viewing the operation device 3 through the image display section 20. The AR-display control section 185 determines a display position of the AR contents on the basis of the relative positions of the operation device 3 and the head-mounted display device 100 detected in the operation shown in Fig. 9 and the direction of the operation device 3 with respect to the head-mounted display device 100. In this processing, the AR-display control section 185 determines a display position of the AR contents corresponding to the position of the target object on the basis of a positional relation between the image pickup range of the camera 61 and the display region of the image display section 20. The positional relation can be calculated from the relative position data stored in the storing section 120.

The AR-display control section 185 may adjust a display size of the AR contents according to the distance between the operation device 3 and the head-mounted display device 100. The AR-display control section 185 may adjust the display position of the AR contents or may deform an image included in the AR contents according to the direction of the LCD 303 of the operation device 3 with respect to the head-mounted display device 100.

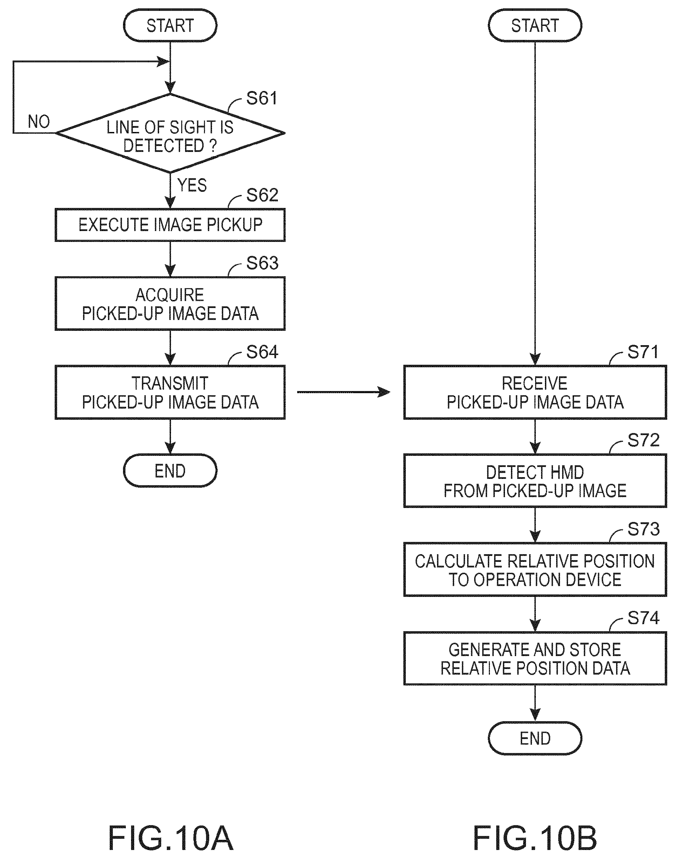

A method in which the head-mounted display device 100 detects a relative position with respect to the operation device 3 is not limited to the method shown in Fig. 9. For example, the operation device 3 and the head-mounted display device 100 may perform data communication and use detection results of each other. An example of this operation is shown in Figs. 10A and 10B.

Figs. 10A and 10B are flowcharts for explaining the operation of the display system 1. Fig. 10A shows the operation of the operation device 3. Fig. 10B shows the operation of the head-mounted display device 100.

The operation shown in Figs. 10A and 10B is executed, for example, when the operation device 3 is in the UI mode.

The control section 350 of the operation device 3 executes image pickup with the cameras 311 and detects a line of sight of the user (step S61). The control section 350 performs the image pickup and an analysis of a picked-up image until a line of sight is detected (NO in step S61).

If a line of sight is detected (YES in step S61), the control section 350 executes image pickup by the cameras 311 (step S62) and acquires picked-up image data (step S63). The control section 350 transmits the picked-up image data with the radio communication section 361 (step S64). In step S62, the control section 350 may perform the image pickup using only one of the cameras 311 or may perform the image pickup with both of the two cameras 311 and acquire and transmit picked-up image data of both the cameras 311.

The control section 140 receives the picked-up image data from the operation device 3 with the communication section 117 (step S71), analyzes the received picked-up image data, and detects an image of the head-mounted display device 100 (step S72). Consequently, in the picked-up image, it is possible to detect a position where the head-mounted display device 100 is projected and the shape of the image of the head-mounted display device 100.

Subsequently, the control section 140 calculates relative positions of the operation device 3 and the head-mounted display device 100 on the basis of the position and the size of the image of the head-mounted display device 100 in the picked-up image (step S73). For example, the control section 140 calculates, from the position of the image of the head-mounted display device 100, a position of the head-mounted display device 100 with respect to the center axis of an angle of view of the cameras 311. The control section 140 calculates a distance between the head-mounted display device 100 and the operation device 3 from the size of the image of the head-mounted display device 100 in the picked-up image. The control section 140 may perform the calculation using an image pickup condition (a zoom magnification, etc.) of the cameras 311.

In step S73, the control section 140 may perform more highly accurate detection using picked-up images of a plurality of cameras 311. For example, the control section 140 may calculate a parallax of a plurality of picked-up images of the cameras 311 and calculate a distance between the operation device 3 and the head-mounted display device 100 from the parallax.

Thereafter, the control section 140 generates data indicating the relative positions of the operation device 3 and the head-mounted display device 100 calculated in step S73 (step S74). The control section 140 stores relative position data including the generated data in the storing section 120.

In this way, the operation device 3 and the head-mounted display device 100 may associate with each other to perform the processing for calculating the relative positions of the operation device 3 and the head-mounted display device 100. In the operation shown in Figs. 10A and 10B, the control section 350 may execute the processing in steps S72 and S73, generate the data indicating the relative positions, and transmit the data to the head-mounted display device 100.

As explained with reference to Figs. 9 to 10B, the head-mounted display device 100 can detect the position of the operation device 3 with respect to the head-mounted display device 100. The head-mounted display device 100 can perform display of AR contents according to the position of the operation device 3. Further, by repeatedly executing the detection of the relative positions, it is possible to calculate a movement of the head-mounted display device 100 with reference to the operation device 3. For example, a screen displayed on the image display section 20 may be transitioned according to the position and the direction of the operation device 3. In this case, changing the relative positions of the operation device 3 and the head-mounted display device 100 is equivalent to operation on the head-mounted display device 100.

For example, in step S35 in Fig. 6, the AR-display control section 185 displays the AR contents to be seen overlapping the operation device 3 in a state in which the user of the head-mounted display 100 is viewing the operation device 3 through the image display section 20. The AR-display control section 185 determines a display position of the AR contents, for example, on the basis of the relative positions of the operation device 3 and the head-mounted display device 100 and the direction of the operation device 3 with respect to the head-mounted display device 100. In this processing, the AR-display control section 185 determines a display position of the AR contents corresponding to the position of the target object on the basis of a positional relation between the image pickup range of the camera 61 and the display region of the image display section 20. The positional relation can be calculated from, for example, the relative position data stored in the storing section 120.

The AR-display control section 185 may adjust the display size of the AR contents according to the distance between the operation device 3 and the head-mounted display device 100. The AR-display control section 185 may adjust the display position of the AR contents according to the direction of the LCD 303 of the operation device 3 with respect to the head-mounted display device 100 or may deform an image included in the AR contents.

The control section 140 may perform association of detection axes (X, Y, and Z axes shown in Fig. 1) of the nine-axis sensor 66 and the direction (the tilt) of the LCD 303 on the basis of the relative position and the direction with respect to the operation device 3 specified in the operations shown in Fig. 9 or Figs. 10A and 10B. Consequently, it is possible to change a display image on the image display section 20 and a display image on the LCD 303 in association with both of the tilt of the head-mounted display device 100 and the tilt of the LCD 303.

Besides, examples of the associated operation of the operation device 3 and the head-mounted display device 100 include a form in which a marker is displayed on the LCD 303 according to control by the control section 350 and the head-mounted display device 100 recognizes the marker. The control section 140 detects the marker from a picked-up image of the camera 61. When the marker displayed by the LCD 303 is a marker that can include information such as a barcode or a two-dimensional code, the control section 140 can acquire the information from a reading result. The control section 140 can perform, on the basis of the acquired information, for example, an operation for establishing communication with the operation device 3 using the communication section 117. When a plurality of the operation devices 3 are present, it is also possible to distinguish the operation devices 3. In this case, it is possible to perform an operation for detecting relative positions of a specific operation device 3 and the head-mounted display device 100 and an operation for establishing communication with the specific operation device 3.

### Another configuration example of the operation device

As another configuration example of the operation target object, a configuration in which operation target objects 4 and 5 are used is explained.

In the display system 1 in the embodiment explained above, the example is explained in which the user uses the operation device 3 capable of executing communication with the head-mounted display device 100.

When the user operates not only the operation device 3 but also, for example, an operation target object not having a communication function, the head-mounted display device 100 can execute processing corresponding to the operation of the operation target object.

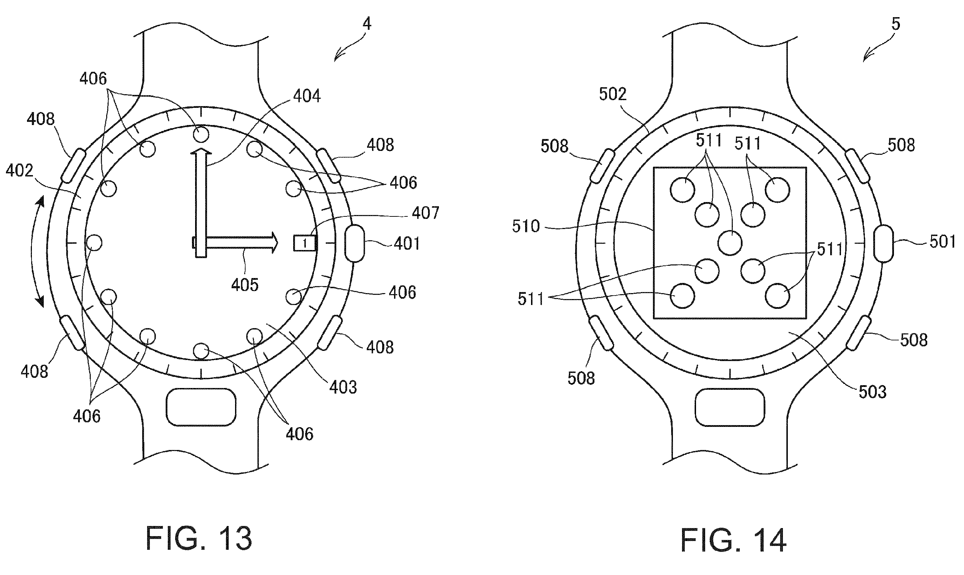

Fig. 13 is an exterior diagram showing the configuration of the operation target object 4 as a configuration example of the operation target object.

The operation target object 4 is a device of a wristwatch type like the operation device 3. However, since a communication function like the communication function of the operation device 3 is not essential, the device is referred to as operation target object. The operation target object 4 is, for example, a wristwatch generally in use.

The operation target object 4 illustrated in Fig. 13 is a wristwatch of an analog type including, in a main body case of the wristwatch, a winding crown 401, a bezel 402, a dial 403, a long hand 404, a short hand 405, indexes 406, and a date window 407. The winding crown 401 can be rotated in a normal position. By pulling out the winding crown 401 in the right direction in the figure and rotating the winding crown 401, the long hand 404 and the short hand 405 can be rotated and date indication of the date window 407 can be put forward to perform adjustment of date and time.

Note that the operation target object 4 may be a wristwatch that includes a liquid crystal display panel in the position of the dial 403 and displays images of the long hand 404, the short hand 405, and the indexes 406 on the liquid crystal display panel. The indexes 406 may be numbers or may be signs and may have any shape as long as the indexes 406 serve as marks of the positions of the long hand 404 and the short hand 405. The date window 407 is not essential and does not have to be provided. The operation target object 4 includes buttons 408 that can be pushed. In the example shown in Fig. 13, the operation target object 4 includes the four buttons 408. However, the number and the positions of the buttons 408 can be optionally changed. The bezel 402 is not essential either. In the example shown in Fig. 13, as indicated by arrows, the bezel 402 can be manually rotated to the left and right according to operation by the user.

The operation target object 4 is shown as an example of a general wristwatch. For example, the head-mounted display device 100 may recognize, as an operation target object, a digital wristwatch including, instead of the dial 403, a liquid crystal display panel that displays numbers in seven segments. The shape of the dial 403 and the case is not limited to a circle and may be a triangle or a square.

Fig. 14 is a diagram showing another example of the operation target object. Like the operation target object 4 (Fig. 13), an operation target object 5 shown in Fig. 14 includes, in a main body case of a wristwatch, a winding crown 501, a bezel 502, and buttons 508. The operation target object 5 includes a display surface 503 in a position same as the position of the dial 403 of the operation target object 4. The display surface 503 is a display screen configured by a liquid crystal display panel, an organic EL panel, or an electronic paper.

The winding crown 501 may be capable of being manually rotated or may be a push button. The bezel 502 may be capable of being manually rotated or may be a fixed decoration. The buttons 508 may be push buttons.

The operation target object 5 displays a marker 510 on the display surface 503. The marker 510 includes a plurality of marks 511. The positions of the marks 511 may be predetermined positions. Display colors, patterns, and the like of the plurality of marks 511 may be different. The operation target object 5 displays date, hour, minute, second, day of the week, and the like on the display surface 503 at normal time and displays the marker 510 according to operation of the buttons 508 and the like. The operation target object 5 may include the dial 403 (Fig. 13) instead of the display surface 503. The marker 510 may be configured by an adhesive sticker. The sticker may be stuck to the dial 403 or the display surface 503. The operation target object 5 may include an image pickup section (not shown in the figure). When recognizing the image display section 20 from a picked-up image of the image pickup section (not shown in the figure), the operation target object 5 may display the marker 510 on the display surface 503.

The operation target object 4 shown in Fig. 13 includes the four buttons 408. The number and the positions of the buttons 408 can be optionally changed. The same applies to the buttons 508 included in the operation target object 5. The buttons 408 and 508 may be operation sections of a touch sensor type. The bezels 402 and 502 are not essential. The shapes of belts and the like of the operation target objects 4 and 5 are also optional.

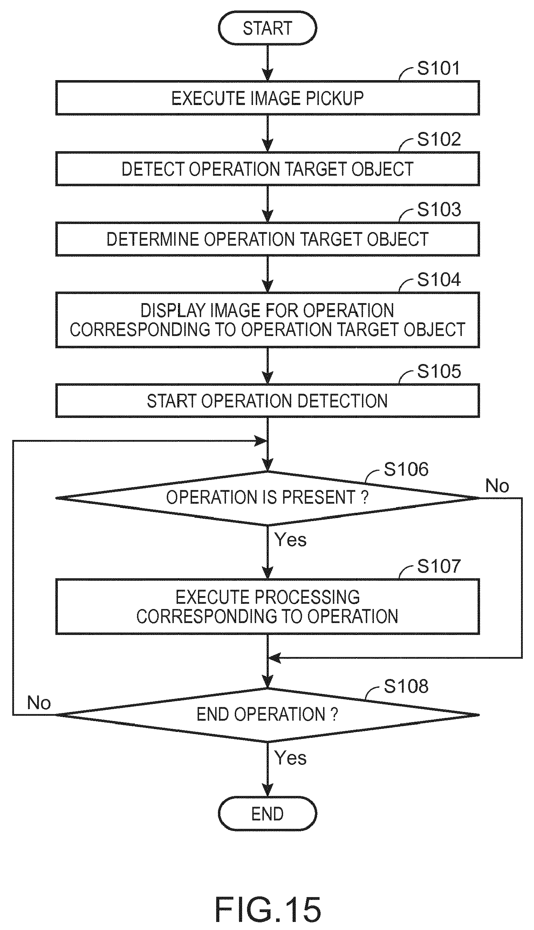

Fig. 15 is a flowchart for explaining the operation of the head-mounted display device 100 and shows an operation performed when the user uses the operation target object 4 or 5.

The control section 140 controls the camera 61 with the image-pickup processing section 181 to execute image pickup (step S101) and acquires picked-up image data. The control section 140 detects, with the AR-display control section 185, an image of the operation target object 4 or the operation target object 5 from a picked-up image (step S102). Processing in which the AR-display control section 185 detects an image of the operation target object 4 or 5 can be realized by, for example, using data indicating a feature value of an image of the operation target object 4 or 5 stored in the storing section 120 in advance.

The control section 140 determines, as an operation target object used for operation, the operation target object detected in step S102 (step S103). When a plurality of operation target objects 4 or 5 are detected in the picked-up image of the camera 61, an operation target object used for operation may be selected and determined according to, for example, operation on the control device 10 by the user.

The control section 140 displays, with the AR-display control section 185, an image for operation corresponding to the operation target object determined in step S103 (a control target object corresponding image) (step S104). The image for operation is an image corresponding to the shape and the like of the operation target object, prepared in advance for each operation target object, and stored in the storing section 120.

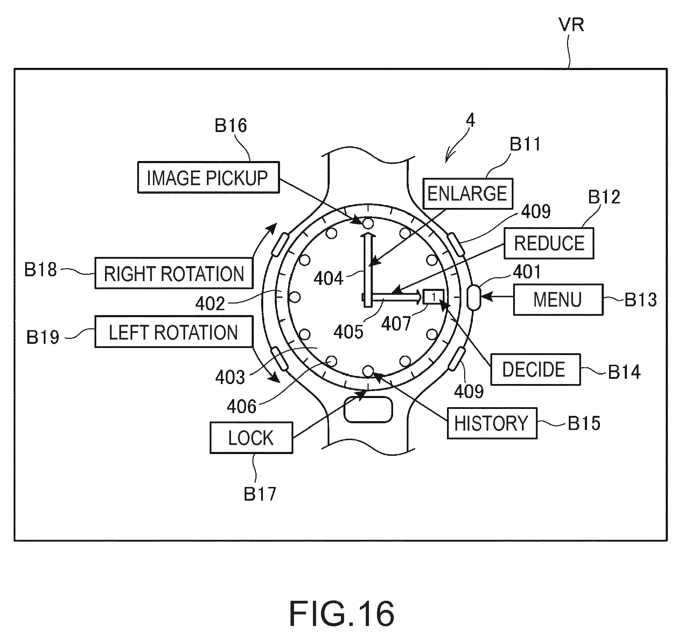

Fig. 16 is a diagram showing an example of a state in which the image for operation is displayed and shows a state in which the image for operation corresponding to the operation target object 4 is displayed.

The operation target object 4 in a real space is visually recognized in the visual field VR of the user through the image display section 20. The AR-display control section 185 displays an image for operation including operation indicators B11 to B19 to be seen in positions corresponding to the operation target object 4. The respective operation indicators B11 to B19 correspond to portions (control objects) of the operation target objects 4. The respective operation indicators B11 to B19 may include arrows indicating the corresponding portions as shown in Fig. 16. The respective operation indicators B11 to B19 introduce, with texts or images, processing content executed by operation on the portions of the operation target object 4.

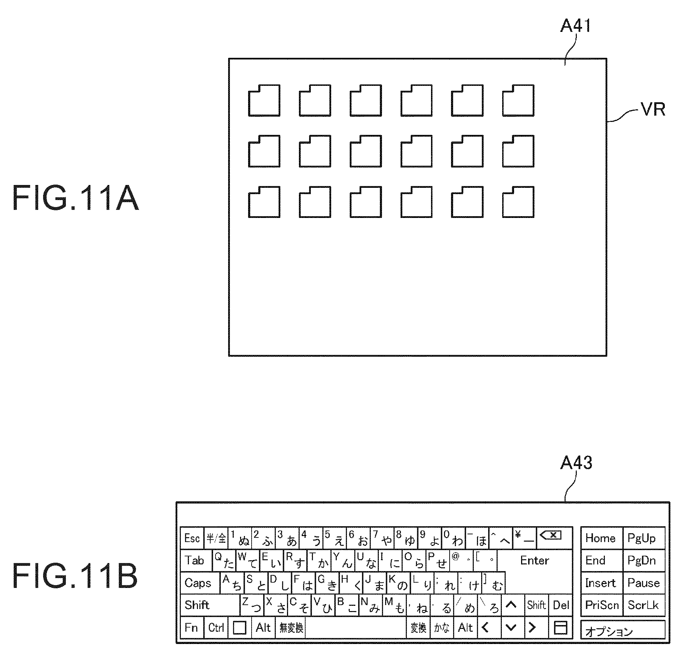

In the example shown in Fig. 16, the operation indicator B11 indicates that display magnification is increased by operation of the long hand 404. The operation indicator B12 indicates that the display magnification is reduced by operation of the short hand 405. The positions of the long hand 404 and the short hand 405 change according to time. Therefore, the AR-display control section 185 may specify the positions of the long hand 404 and the short hand 405 from the picked-up image of the camera 61 and change or adjust display positions of the operation indicators B11 and B12 according to the positions of the long hand 404 and/or the short hand 405. The operation indicator B13 indicates that the head-mounted display device 100 displays a menu screen according to operation for rotating the winding crown 401 and transitions screen display, for example, as explained with reference to Figs. 11A and 11B. The operation indicator B14 indicates that decision is instructed by operation of the date window 407. The operation indicator B15 indicates that a history is displayed by operation of the index 406 in the position of 6 o'clock. The operation indicator B16 indicates that the camera 61 performs image pickup according to operation of the index 406 in the position of 12 o'clock. The operation indicator B17 indicates that operation on the operation target object 4 is locked according to operation on the position of 6 o'clock of the bezel 402. The operation indicators B18 and B19 indicate that display is rotated to the right or the left according to operation for rotating the bezel 402.

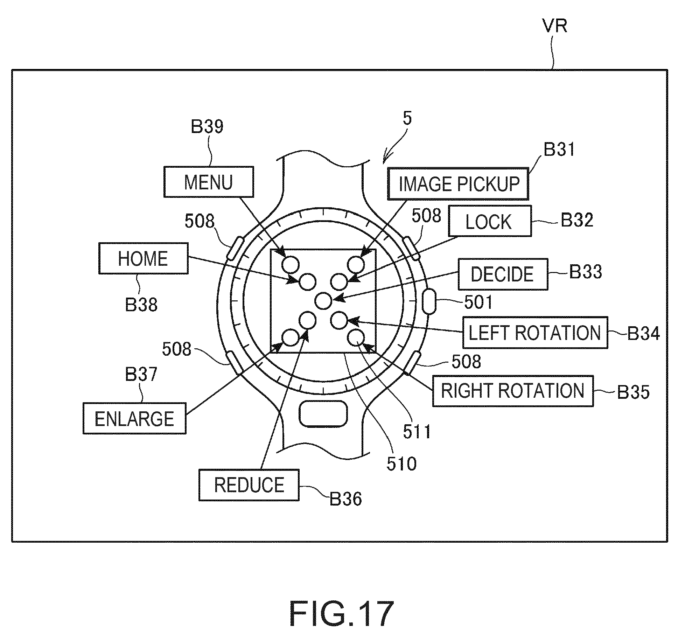

Fig. 17 is a diagram showing another example of the state in which the image for operation is displayed and shows a state in which an image for operation corresponding to the operation target object 5 is displayed.

The operation target object 5 in a real space is visually recognized in the visual field VR of the user through the image display section 20. The AR-display control section 185 displays an image for operation including operation indicators B31 to B39 to be seen in positions corresponding to the operation target object 5. The respective operation indicators B31 to B39 correspond to the marks 511 (control objects) of the marker 510. The respective operation indicators B31 to B39 may include arrows indicating the corresponding marks 511 as shown in Fig. 17. The respective operation indicators B31 to B39 introduce, with texts or images, processing content executed by operation on the marks 511.

In the example shown in Fig. 17, the operation indicator B31 indicates that the camera 61 performs image pickup according to operation of the mark 511. The operation indicator B32 indicates that operation on the operation target object 4 is locked according to the operation of the mark 511. The operation indicator B33 indicates that decision is instructed by the operation of the mark 511. The operation indicators B34 and B35 indicate that display is rotated to the right or the left according to the operation of the mark 511. The operation indicator B36 indicates that display magnification is reduced according to the operation of the mark 511. The operation indicator B37 indicates that the display magnification is increased according to the operation of the mark 511. The operation indicator B38 indicates that a home screen is displayed according to the operation of the mark 511. The operation indicator B39 indicates that the head-mounted display device 100 displays a menu screen according to the operation of the mark 511 and transitions screen display, for example, as explained with reference to Figs. 11A and 11B.

The image for operation shown in Fig. 17 can also be considered an image for operation corresponding to the operation target object 5 and can also be considered an image for operation corresponding to the marker 510. That is, when the marker 510 is detected from the picked-up image of the camera 61, the control section 140 may display the image for operation shown in Fig. 17. In this case, the configuration of the buttons 508 and the like included in the operation target object 5 is not particularly limited. For example, a sticker of the marker 510 can be stuck to the arm of the user. The marker 510 (or the arm stuck with the marker 510) can be used as an operation target object. Therefore, any object separate from the image display section 20 and including the marker 510 in a state in which image pickup of the marker 510 can be performed by the camera 61 can be used as the operation target object.

In a state in which the image for operation including the operation indicators B11 to B19 shown in Fig. 16 is displayed, operation on the operation target object 4 is performed by, for example, placing a finger of the user on a portion of the operation target object 4. In this case, the control section 140 detects, with the device control section 183, an image of the finger of the user from the picked-up image of the camera 61 and specifies a portion of the operation target object 4 close to the position of the fingertip. Consequently, considering that the specified portion is operated, the control section 140 executes the processing indicated by the operation indicators B11 to B19.

In a state in which the image for operation including the operation indicators B31 to B39 shown in Fig. 17 is displayed, operation on the operation target object 5 is performed by, for example, placing a finger of the user on the mark 511. In this case, the control section 140 detects, with the device control section 183, an image of the finger of the user from the picked-up image of the camera 61, specifies the mark 511 close to the position of the fingertip, and specifies a position of the mark 511 in the marker 510. Consequently, considering that the specified mark 511 is operated, the control section 140 executes the processing indicated by the operation indicators B31 to B39.

After displaying the image for operation illustrated in Fig. 16 or Fig. 17 in step S104 of Fig. 15, the control section 140 starts detection of operation (step S105). The control section 140 determines presence or absence of operation with the device control section 183 (step S106). If the operation target object is operated (YES in step S106), the control section 140 executes processing indicated by the image for operation according to an operated position or portion (step S107). After the execution of the processing, the control section 140 shifts to step S108. If operation corresponding to the image for operation is not detected (NO in step S106), the control section 140 shifts to step S108.

In step S108, the control section 140 determines whether to end the operation performed using the image for operation. If the end of the operation is instructed by operation by the user or if it is detected that the operation target object is not visually recognized in the visual field VR of the user (YES in step S108), the control section 140 ends the processing. If the operation is not ended (NO in step S108), the control section 140 returns to step S106.

In this embodiment, when the head-mounted display device 100 recognizes the operation device 3 or the operation target object 4 or 5 on the basis of, for example, the picked-up image of the camera 61, the AR-display control section 185 reads out and displays the data of the AR contents from the storing section 120.

The AR display for operation setting shown in Fig. 7A and the image for operation shown in Figs. 16 and 17 are examples of the AR contents.

Fig. 18 shows a configuration example of data related to the AR contents among the data stored in the storing section 120. Note that the storing section 120 stores not only AR contents data 123 and target device data 127 shown in Fig. 18 but also other data. However, the other data are not shown in the figure. The storing section 120 that stores the AR contents data 123 and the target device data 127 is equivalent to the data storing section.

The data related to the AR contents is configured by the AR contents data 123 and the target device data 127. The AR contents data 123 includes AR element display data 123a, position attribute data 123b, and corresponding processing data 123c.

The AR contents data 123 is data for displaying the AR contents and corresponds to data for displaying the AR display for operation setting shown in Fig. 7A and the image for operation shown in Figs. 16 and 17. The AR element display data 123a is data for displaying elements of the AR contents for operation (images for operation). The elements of the AR contents are characters and images displayed in association with the operation sections of the operation device or the operation target object and may involve adjunctive images such as arrows.

In the example shown in Fig. 7A, the allocation candidate indicators A1, A2, A3, and A4 and the setting candidates A11, A12, A13, and A14 are equivalent to the elements. In the example shown in Fig. 7B, the allocation candidate indicators A21, A22, A23, and A24 and the setting candidates A31, A32, A33, and A34 are equivalent to the elements. In the example shown in Fig. 16, the operation indicators B11 to B19 are equivalent to the elements. In the example shown in Fig. 17, the operation indicators B31 to B39 are equivalent to the elements. The AR element display data 123a includes, for example, image data for displaying the elements, text data, and data designating display attributes (a color, a size, a font, a background, etc.) of images and texts.

The position attribute data 123b is data for designating display positions of the elements. The display positions of the elements are set for the respective elements included in the AR element display data 123a. The position attribute data 123b may be data for designating the display positions of the elements as fixed positions in the right display driving section 22 and the left display driving section 24. The position attribute data 123b may be data for designating the display positions of the elements as relative positions with respect to the operation device 3 or the operation target object 4 or 5. The position attribute data 123b may be data for designating the display positions of the elements as relative positions with respect to the operation sections of the operation device 3 or the operation target object 4 or 5. The position attribute data 123b can be, for example, data for designating the display positions of the setting candidates A11 to A14 and A31 to A34 shown in Figs. 7A and 7B as relative positions with respect to the bezel 301 of the operation device 3. The position attribute data 123b may be, for example, data for designating the display positions of the operation indicators B11 to B19 shown in Fig. 16 as relative positions with respect to the winding crown 401, the bezel 402, the dial 403, the long arm 404, the short arm 405, the indexes 406, the date window 407, the buttons 408, and the like of the operation target object 4. The position attribute data 123b may be, for example, data for designating the display positions of the operation indicators B31 to B39 shown in Fig. 17 as relative positions with respect to the marker 510, the marks 511, and the like of the operation target object 5.

The corresponding processing data 123c is data for deciding processing executed by the control section 140 when the elements included in the AR element display data 123a are selected or designated according to operation by the user. In the example shown in Fig. 7A, according to operation of the operation section (e.g., the bezel 301) of the operation device 3, the control section 140 executes, for example, processing for switching a plurality of candidates in order and an operation for transitioning the screen displayed by the image display section 20. According to operation of the operation device 3, the device control section 183 may execute processing for transmitting control data for instructing a detection start of the touch panel 304 and the nine-axis sensor 368 and a shift to a non-detection state.

In the example shown in Fig. 16, the control section 140 increases the display magnification according to operation on the long arm 404 and reduces the display magnification according to operation on the short hand 405. The control section 140 displays a menu screen and transitions the screen display according to operation for rotating the winding crown 401. The control section 140 performs processing for receiving an instruction for decision according to operation of the date window 407 and displays a history according to operation on the index 406 in the 6 o'clock position. The control section 140 performs image pickup with the camera 61 according to operation on the index 406 in the 12 o'clock position and locks operation on the operation target object 4 according to operation on the 6 o'clock position of the bezel 402. The control section 140 rotates display to the right or the left according to operation for rotating the bezel 402.

In the example shown in Fig. 17, the control section 140 performs, according to operation of the marks 511, processing such as image pickup of the camera 61, lock of operation on the operation target object 4, reception of an instruction for decision, rotation of display, an increase or a reduction of display magnification, display of a home screen, display of a menu screen, and transition of screen display.

The corresponding processing data 123c includes data for designating these kinds of processing.

The target device data 127 is data indicating an operation device or an operation target object corresponding to the AR contents data 123. The target device data 127 includes, for example, data of an image feature value for detecting an operation device or an operation target object from the picked-up image of the camera 61.

The target device data 127 is referred to, for example, when the control section 140 detects the operation device 3 in step S52 (Fig. 9) and when the control section 140 detects the operation target object 4 or 5 in step S102 (Fig. 15). The control section 140 can detect or recognize an operation device or an operation target object on the basis of the target device data 127, specify AR contents corresponding to the operation device or the operation target object, and display the AR contents on the basis of the AR contents data 123.

In the storing section 120, a plurality of AR contents data 123 can be stored. Data concerning a plurality of AR contents may be included in one AR contents data 123. The target device data 127 is data for designating, for each of the AR contents, an operation device or an operation target object corresponding to the AR content. A specific form of association of the data is optional. For example, the AR contents data 123 may be stored in the storing section 120 for each target device data 127. The target device data 127 may include data for designating, concerning each of the plurality of AR contents data 123, an operation device or an operation target object corresponding to the AR contents data 123. The target device data 127 may include data indicating operation devices or operation target objects corresponding to the plurality of AR contents included in the AR contents data 123.

The target device data 127 may be included in the AR contents data 123. In this case, the AR contents data 123 has a form including the AR element display data 123a, the position attribute data 123b, the corresponding processing data 123c, and the target device data 127 in association with one another for each of the AR contents.

Types, positions, the number, and the like of the elements in the AR contents can be changed according to operation by the user. The AR contents data 123 can be edited reflecting this change.

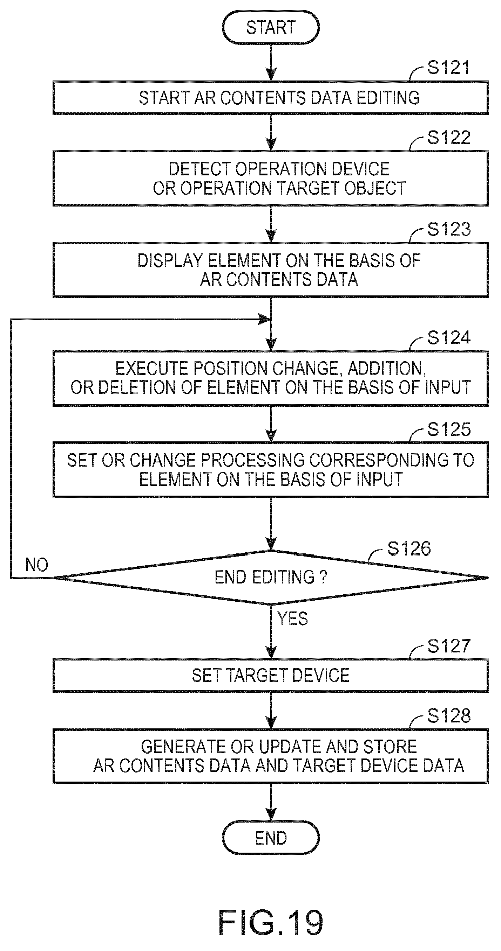

Fig. 19 is a flowchart for explaining processing for editing the AR contents data 123.

The control section 140 starts editing of the AR contents data 123 according to operation by the user (step S121). In the following explanation, the operation by the user may be any one of operation received by the operation section 111 or gesture operation by an indicating body such as a hand of the user detected by the camera 61.

The control section 140 detects an operation device or an operation target object, for example, as in the processing executed in steps S51 and S52 (step S122). The control section 140 displays, on the basis of the AR contents data 123, AR contents corresponding to the detected operation device or operation target object (step S123). When an unknown operation device or operation target object is set as a target, the AR contents data 123 corresponding to the operation device or the operation target object is not stored in the storing section 120. In this case, the control section 140 may detect that the operation device or the operation target object is unknown or operation by the user may indicate that the operation device or the operation target object is unknown. The control section 140 displays the AR contents using the general-purpose AR contents data 123 stored in the storing section 120 in advance or the AR contents data 123 designated according to operation or prior setting by the user.

When an instruction of a change (movement) of the position, addition, or deletion of the AR contents is input according to operation by the user concerning the elements of the AR contents displayed in step S123, the control section 140 performs the position change, the addition, or the deletion of the AR contents according to the input (step S124).

When, concerning the elements of the AR contents being displayed, according to operation by the user, processing executed by the control section 140 is designated according to the elements of the AR contents, the control section 140 performs designation or a change of the processing executed by the control section 140 according to an input (step S125).

Note that execution order of the processing in steps S124 and S125 can be changed. The processing in steps S124 and S125 may be executed in parallel.

The control section 140 determines whether the editing of the AR contents data 123 ends (step S126). If the editing does not end (NO in step S126), the control section 140 returns to step S124. If the editing ends (YES in step S126), the control section 140 generates the target device data 127 in which the operation device or the operation target object detected in step S122 is set as a target device (step S127). The control section 140 stores the AR contents data 123 reflecting editing content in steps S124 and S125 and the target device data 127 generated in step S127 in the storing section 120 in association with each other (step S128) and ends the processing.

In this way, according to the operation by the user, it is possible to designate and change the display form of the AR contents displayed according to the operation device 3, the operation target object 4 or 5, or the like, the types, the positions, and the number of the elements, and the processing executed according to the elements. Therefore, it is possible to display AR contents matching a use and a taste of the user. Further, it is possible to attain further improvement of convenience.

The head-mounted display device 100 may download the AR contents data 123 and the target device data 127 by performing communication with an external apparatus using the communication section 117. In this case, the head-mounted display device 100 may perform communication with an external apparatus that relays communication between another communication network and the head-mounted display device 100 such as a smart phone or a router and download the data from a server apparatus (not shown in the figure) through the communication network. The head-mounted display device 100 may download the AR contents data 123 and the target device data 127 from an external apparatus (e.g., a personal computer or a smart phone) connected by the communication section 117.

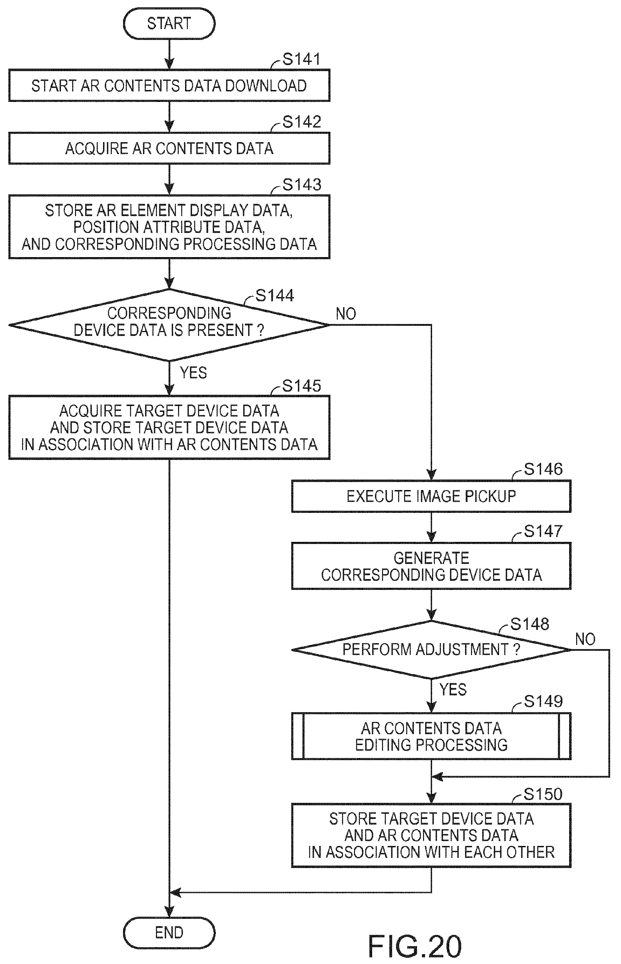

Fig. 20 is a flowchart for explaining processing in which the head-mounted display device 100 downloads the AR contents data.

The control section 140 starts download according to operation by the user or an access from an external apparatus (step S141). The control section 140 downloads and acquires the AR contents data 123 (step S142). The control section 140 stores the AR element display data 123a, the position attribute data 123b, and the corresponding processing data 123c of the acquired AR contents data 123 in the storing section 120 (step S143). If necessary, in step S143, the control section 140 may perform setting for making the stored data usable.

The control section 140 determines whether the target device data 127 or data for designating an operation device or an operation target object corresponding to the target device data 127 is included in the downloaded data (step S144). If the relevant data is included (YES in step S144), the control section 140 stores the target device data 127 in the storing section 120 in association with the AR contents data 123 (step S145) and ends the processing.

If the target device data 127 or the data for designating the operation device or the operation target object corresponding to the target device data 127 is not included (NO in step S144), the control section 140 starts processing for generating the target device data 127. That is, the control section 140 executes image pickup by the camera 61 and acquires picked-up image data (step S146) and generates the target device data 127 on the basis of the picked-up image data (step S147). Consequently, an operation device or an operation target object present in the image pickup range of the camera 61 is set as an operation device or an operation target object corresponding to the downloaded AR contents data 123.

The control section 140 determines whether adjustment concerning correspondence between the AR contents data 123 and the target device data 127 is performed (step S148). This adjustment is adjustment necessary for associating the AR contents data 123 with the operation device or the operation target device subjected to the image pickup in step S146. Specifically, in step S147, the control section 140 extracts an image of the operation device or the operation target object from the picked-up image data, detects operation sections, calculates a positional relation of the operation section, and generates the target device data 127. Which elements of the AR contents data 123 are associated with the detected operation sections is affected by a detection state of the operation sections. Therefore, for example, the control section 140 determines, on the basis of an instruction of the user, whether association between the operation sections and the elements of the AR contents is adjusted. For example, display of a message for requesting an instruction of the user may be performed.

If the adjustment is performed (YES in step S148), the control section 140 performs processing for editing the AR contents data (step S149). In step S149, for example, the processing (steps S121 to S128) explained with reference to Fig. 19 can be executed. Thereafter, the control section 140 stores the edited AR contents data 123 and the target device data 127 generated in step S147 and edited in step S149 in the storing section 120 in association with each other (step S150) and ends the processing. If the adjustment is not performed (NO in step S148), the control section 140 shifts to step S150 without executing step S149 and stores the target device data 127 generated in step S147 in the storing section 120 in association with the downloaded AR contents data 123.

In the operation device 3, the control section 350 displays an image on the LCD 303 on the basis of data stored in advance. The operation target object 5 displays the marker 510 with a function of a control section (not shown in the figure) on the basis of data stored in advance. These data for display are not limited to fixed data and may be able to be downloaded from, for example, the head-mounted display device 100 or another external apparatus and added.

For example, the operation target object 5 may be capable of editing or adding the marker 510. As explained with reference to Figs. 14 and 17, the operation target object 5 displays the marker 510 on the display surface 503 configured by the LCD or the display of the electronic paper type. The marker 510 can be changed into any form as long as the head-mounted display device 100 can recognize the marker 510.

The head-mounted display device 100 detects, as the operation sections, the marks 511 in the marker 510 displayed by the operation target object 5 and displays the operation indicators B31 to B39 serving as the AR contents in positions corresponding to the marks 511. The operation indicators B31 to B39 may be associated with, for example, colors of the marks 511. The control section 140 distinguishes the marks 511 with the colors of the marks 511 and displays the operation indicators B31 to B39 in positions corresponding to the marks 511 of the colors associated with the operation indicators B31 to B39 in advance. In this case, the operation indicators B31 to B39 are displayed irrespective of the positions of the marks 511 in the marker 510.

In this example, data for designating the colors of the marks 511 is included in the position attribute data 123b. Specifically, data for designating an image of the AR element display data 123a to be displayed in a position corresponding to the mark 511 of a specific color is included in the position attribute data 123b.

Therefore, a plurality of markers 510 in which the colors of the marks 511 are common and the positions of the marks 511 are different can cause the head-mounted display device 100 to execute the same function. In this case, the user can properly use, without changing the processing to be executed by the head-mounted display device 100, the plurality of markers 510 in which the positions of the marks 511 are different and the colors of the marks 511 are common.

In this case, the markers 510 may be able to be switched and displayed according to, for example, operation of the buttons 508 included in the operation target object 5. The operation target object 5 may execute short-range radio communication with the communication section 117 of the head-mounted display device 100 and switch the markers 510 on the basis of control data transmitted by the head-mounted display device 100.

This is only an example. The head-mounted display device 100 may distinguish the marks 511 on the basis of patterns (textures) of the marks 511 or may distinguish the marks 511 according to the shapes of the marks 511. In this case, the markers 510 in which the positions of the marks 511 are different can be properly used without affecting the function of the head-mounted display device 100 in a range in which the patterns or the shapes of the marks 511 do not change.

In this case, display on the display surface 503 can be switched like changing clothes according to preference of the user who uses the operation target object 5. When acquiring the data of the marker 510, the operation target object 5 may be connected to the head-mounted display device 100 or an external apparatus by radio communication or a cable for communication.

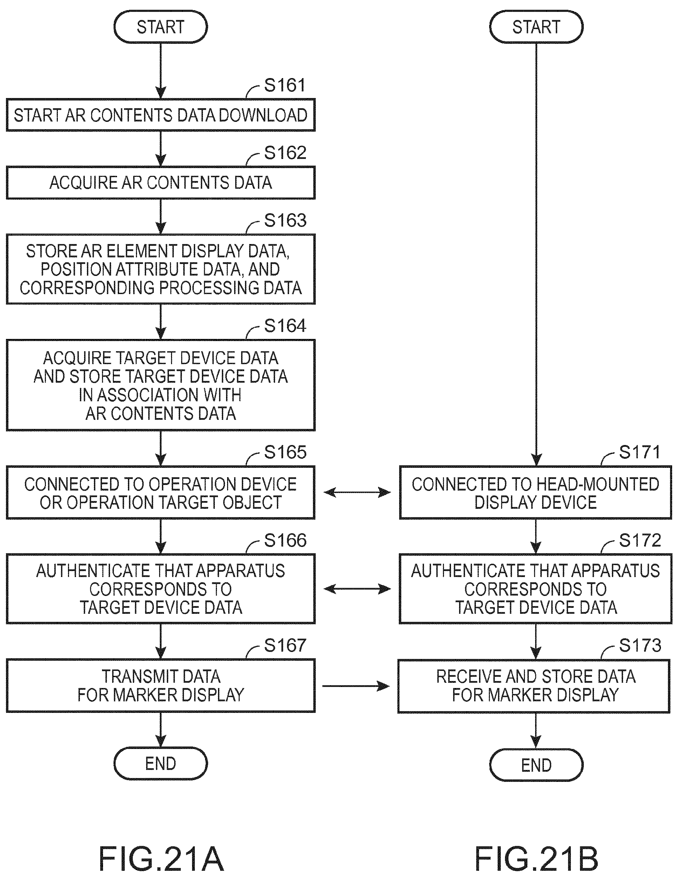

Further, the markers 510 may be changed in a range in which the change affects the function executed by the head-mounted display device 100. In this case, since the function executed by the head-mounted display device 100 changes, the head-mounted display device 100 desirably changes the AR contents data 123 and the target device data 127. For example, the head-mounted display device 100 downloads AR contents data 123 and the target device data 127 from an external apparatus (not shown in the figure) and the operation target object 5 acquires the marker 510 corresponding to the AR contents data 123 and the target device data 127 from the head-mounted display device 100. This example is explained with reference to Figs. 21A and 21B.

Figs. 21A and 21B are flowcharts for explaining an operation in which the head-mounted display device 100 and the operation target object 5 download the AR contents data 123 and data related to the AR contents data 123. Fig. 21A shows the operation of the head-mounted display device 100. Fig. 21B shows the operation of the operation target object 5. The operation target object 5 that performs the operation shown in Fig. 21B includes a communication section (not shown in the figure) that communicates with the head-mounted display device 100. For example, the operation target object 5 includes a radio communication section (not shown in the figure) that executes radio communication with the communication section 117 or a communication interface (not shown in the figure) including a connector connected to the communication section 117 and the interface 125 by wire.

The control section 140 starts download according to operation by the user or an access from an external apparatus (step S161). The control section 140 downloads and acquires the AR contents data 123 (step S162). The control section 140 stores the AR element display data 123a, the position attribute data 123b, and the corresponding processing data 123c of the acquired AR contents data 123 in the storing section 120 (step S163). If necessary, in step S163, the control section 140 may perform setting for making the stored data usable.

The control section 140 stores the target device data 127 associated with the downloaded data in the storing section 120 in association with the AR contents data 123 (step S164). For example, the target device data 127 is acquired from the external apparatus together with the AR contents data 123 in step S162.

The control section 140 shifts to a state in which the control section 140 is connected to the operation target section 5 and capable of performing data communication (step S165). The operation target object 5 shifts to a state in which the operation target object 5 is connected to the head-mounted display device 100 and capable of performing data communication (step S171).

The control section 140 authenticates that the apparatus (the operation target object 5) connected in step S165 is an apparatus corresponding to the target device data 127 stored in step S164 (step S166). The operation target object 5 transmits data for authentication such as a product name or a model number of a product to the head-mounted display device 100 in response to a request of the head-mounted display device 100 and performs the authentication together with the head-mounted display device 100 (step S172).

After succeeding in the authentication, the control section 140 transmits data for displaying the marker 510 to the operation target object 5 (step S167). For example, this data is acquired from the external apparatus together with the target device data 127 in step S162. The operation target object 5 receives and stores data for displaying the marker 510 transmitted by the head-mounted display device 100 (step S173).

According to the processing in Figs. 21A and 21B, the operation target object 5 can acquire and store data for displaying a new marker 510 and display the new marker 510 on the basis of the data. The head-mounted display device 100 displays AR contents according to the marker 510 displayed by the operation target object 5. The AR contents include operation indicators like the operation indicators B31 to B39 illustrated in Fig. 17. Therefore, in a state in which the operation target object 5 displays the marker 510, it is possible to display the AR contents in a position corresponding to the marker 510 by picking up an image of the operation target object 5 with the camera 61. The head-mounted display device 100 can detect the mark 511 included in the new marker 510 and display AR contents including an operation indicator corresponding to the mark 511. When operation of the mark 511 included in the new marker 510 is detected, processing designated by an operation indicator displayed according to the mark 511 can be executed.

In this case, types of the markers 510 that can be displayed in the operation target object 5 can be increased. The new marker 510 is not restricted to, for example, make the marks 511 common to the marker 510 that can be previously displayed. Therefore, there is an advantage that the markers 510 of various designs can be displayed. Further, in the head-mounted display device 100, types of the marks 511 capable of detecting operation can be changed or added. Further, a function to be executed according to operation on the mark 511 can be added. For example, it is possible to change a communication protocol executed between the operation target object 5 and the head-mounted display device 100, display an operation indicator of a new design adjusted to the exterior of the operation target object 5, and execute a new function. Therefore, it is possible to add the operation target object 5 to be used for the head-mounted display device 100. It is possible to change, according to a change of the operation target object 5, a function and a use executed by the head-mounted display device 100.

The AR contents data 123 and the target device data 127 are not limited to data for setting the function of the head-mounted display device 100. For example, in addition to the AR contents data 123 and the target device data 127, a computer program corresponding to a function executed by the control section 140 on the basis of the AR contents data 123 may be included. One application program including the computer program in the AR contents data 123 and the target device data 127 can also be adopted. In this case, the function itself executed by the control section 140 can be added or changed. For example, it is assumed that the operating system 150 is an OS for a mobile device (a smart phone or a tablet computer) such as an Android (registered trademark) OS, iOS (registered trademark), or Windows (registered trademark). In this case, by adopting the application program including the AR contents data 123 and the target device data 127, it is possible to easily download and set the AR contents data 123 and the target device data 127 integrally. When the user purchases a new operation target object 5 or when the user uses a new operation target object 5, it is possible to easily perform setting of the head-mounted display device 100 corresponding to the new operation target object 5 and the marker 510.

As explained above, the display system 1 in the embodiment applied with the invention includes the head-mounted display device 100 and the operation device 3 configured separately from the image display device 20. The head-mounted display 100 is worn on the head of the user and includes the image display device 20 of transmission type that transmits an outside scene and causes the user to visually recognize the outside scene. The operation device 3 includes, as the operation sections that receive operation by the user, the bezel 301, the touch panel 304, the button 305, the winding crown-type operator 307, and the buttons 309. The operation sections may include the nine-axis sensor 368. The band section 300 including the nine-axis sensor 368 may be used as the operation section. The head-mounted display device 100 includes the control section 140 that controls the display of the image display section 20. The control section 140 performs, on the basis of operation on the operation device 3, with the image display section 20, AR display related to the outside scene transmitted through the image display section 20. With this configuration, when the head-mounted display device 100 performs the AR display related to the outside scene, the operation of the operation device 3 separate from the head-mounted display device 100 is reflected, it is possible to control the AR display with intuitive input operation.

For example, after functions are allocated to the operation sections of the band section 300 by the setting shown in Fig. 7A in the operation device 3, the head-mounted display device 100 may detect operation on the operation device 3 such as contact on the operation section or movement of a finger. Specifically, the control section 140 may detect operation on the operation device 3 on the basis of picked-up image data of the camera 61.

The operation device 3 may include the radio communication section 361 that transmits data indicating operation received by the operation section to the head-mounted display device 100. In this case, the control section 140 performs, on the basis of the data transmitted from the operation device 3, in a form associated with the operation section, with the image display section 20, AR display related to the outside scene transmitted through the image display section 20.

The control section 140 detects operation of the operation section on the basis of the data transmitted from the operation device 3 and changes, according to the detected operation, AR display being displayed on the image display section 20. Therefore, while the AR display is performed, it is possible to change the AR display by operating the operation device 3.

The control section 140 may be capable of setting allocation of AR display to the operation sections.

In this case, the control section 140 may be capable of executing processing for updating the allocation of the AR display to the operation sections.

The operation sections include the touch panel 304 that detects contact operation. The touch panel 304 includes a plurality of operation regions. The control section 140 displays, with the image display section 20, AR display allocated to the operation region operated on the touch panel 304. Therefore, it is possible to perform various kinds of operation for the AR display by performing touch operation on the operation device 3.

The control section 350 of the operation device 3 may detect a movement of the operation device 3 as operation.

Operation on the head-mounted display device 100 can be performed by moving the operation device 3.

The operation device 3 may include the cameras 311 and transmit data including picked-up images of the cameras 311 to the head-mounted display device 100 with the radio communication section 361. In this case, a picked-up image picked up by the operation device 3 separate from the head-mounted display device 100 can be displayed in the head-mounted display device 100. In the display system 1, the operation device 3 can perform authentication of the head-mounted display device 100.

Figs. 11A to 12 are diagrams showing examples of functions executed by the head-mounted display device 100 according to operation of the operation device 3.

Fig. 11A shows an example in which a screen for selection A41 for selecting a file and a folder is displayed in the visual field VR of the user. In a state in which a plurality of selection candidates (in this example, folders) are displayed side by side in this way, when operation for rotating the bezel 301 is performed, the candidates are selected in order.

In Fig. 11B, a virtual keyboard A43 displayed by operation of the operation device 3 or the control device 10 is shown. A plurality of virtual keys corresponding to characters and signs are arranged on the virtual keyboard A43. When operation for rotating the bezel 301 is performed during the display of the virtual keyboard A43, the virtual keys are selected in order in the virtual keyboard A43.

As shown in Figs. 11A and 11B, in the operation for selecting one candidate from the plurality of candidates displayed in the visual field VR of the user, the operation for rotating the bezel 301 is suitable. In this case, a direction in which the candidates are switched and selected in order may be changed according to a rotating direction of the bezel 301. Operation for deciding the selection can be performed by, for example, the button 305 included in the operation device 3. The bezel 301 can be intuitively operated. Since the bezel 301 is located in the outer circumferential portion of the plane section 300A of the operation device 3, the bezel 301 can be operated blindly. Therefore, the user can operate the bezel 301 while directing attention to AR display displayed by the image display section 20. Since the selection can be decided by the button 305 provided in the position away from the plane section 300A and larger than the other operators of the switch type, it is possible to more easily perform the operation. Since the position and the size of the button 305 are different from the positions and the sizes of the buttons 309 and the winding crown-type operator 307, like the bezel 301, the button 305 can be easily operated blindly. Therefore, it is possible to perform intuitive and sure operation while viewing an image displayed by the image display section 20.

Note that, selection by sound can be performed in the operation for selecting one candidate from the plurality of candidates displayed in the visual field VR of the user as shown in Figs. 11A and 11B. In this case, when a peculiar name, number, signs, or the like attached to a candidate is designated by sound, the operation device 3 may detect the sound with the microphone 365 and transmit data of the detected sound to the head-mounted display device 100. The control section 140 may perform setting.

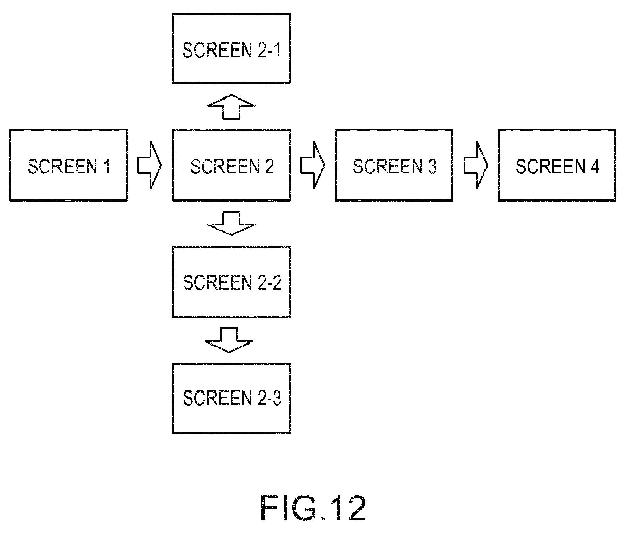

Fig. 12 schematically shows, concerning an example in which a screen is transitioned according to operation of the bezel 301, the screen to be transitioned.

When the operating system 150 of the head-mounted display device 100 is configured to switch and transition a plurality of screens like iOS (registered trademark) and Android (registered trademark), the operation of the bezel 301 can be more effectively used. In the example shown in Fig. 12, four screens 1 to 4 can be switched and displayed in order according to operation for rotating the bezel 301. A feeding direction in sequentially selecting the screens 1 to 4 may be changed to a regular direction and a reverse direction according to an operating direction of the bezel 301.

In the head-mounted display device 100, in a state in which the screen 2 among the screens 1 to 4 is displayed, after a display screen is decided by operation of the button 305, four screens 2, 2-1, 2-2, and 2-3 can be transitioned according to operation of the bezel 301. In this case as well, a feeding direction in sequentially selecting the four screens may be changed to a regular direction and a reverse direction according to the operating direction of the bezel 301.

In the example shown in Fig. 12, the display screen can be quickly transitioned by rotating the bezel 301 not through decision operation of the button 305.

The operation of the display system 1 is not limited to the example explained above. For example, an operation explained below can be executed.

The head-mounted display device 100 may perform, according to operation of the operation device 3, enlargement, reduction, rotation, copying, page feeding, and the like of an image (including characters) displayed on the image display section 20. In this case, the operation in the operation device 3 may include not only rotation of the bezel 301, pressing operation of the buttons 309, pressing operation of the button 305, and operation for rotating the winding crown-type operator 307 but also, for example, operation for touching the touch panel 304 with a finger. For example, the display image may be enlarged according to operation for turning the bezel 301 to the right (clockwise) and may be reduced according to operation for turning the bezel 301 to the left (anti-clockwise). The display image may be enlarged when contact of the finger with the center portion of the touch panel 304 is detected and may be reduced when contact of the finger with a circumferential edge portion (e.g., the vicinity of a lower left frame) of the touch panel 304 is detected. When the finger in contact with the touch panel 304 performs a rotational motion such as right turn or left turn while being in contact, the display image may be rotated according to the rotation.

When the touch panel 304 is adapted to so-called multi-touch operation, an operation for enlarging, reducing, or rotating the display image of the head-mounted display device 100 according to, for example, operation for enlarging or reducing an interval among a plurality of operation points on the touch panel 304 may be performed.

The operation device 3 can also transmit detection values of the nine-axis sensor 368 to the head-mounted display device 100. The operation device 3 may include a GPS detecting section and transmit the present position detected by the GPS detecting section to the head-mounted display device 100. In this case, the control section 140 of the head-mounted display device 100 can detect relative positions of the operation device 3 and the head-mounted display device 100 on the basis of a detection value received from the operation device 3 and a detection value of the three-axis sensor 113. According to a change in the detected relative positions, a change in display such as enlargement, reduction, or rotation of the display image may be performed or fade-in display or fade-out display of an image may be performed. In this case, the display can be changed by operation for bringing the operation device 3 close to the head-mounted display device 100 and moving the operation device 3 away from the head-mounted display device 100. Further, the operation device 3 transmits data of detection values of the nine-axis sensors 368 to the head-mounted display device 100. Therefore, the head-mounted display device 100 can detect operation for moving the operation device 3.

In this way, the display system 1 includes the head-mounted display device 100 including the display section worn on the head of the user and the operation device 3 configured separately from the display section. The operation device 3 includes, as the operation sections that receive operation of the user, the bezel 301, the touch panel 304, the button 305, the winding crown-type operator 307, and the buttons 309. The operation sections may include the nine-axis sensor 368. The band section 300 including the nine-axis sensor 368 may be used as the operation section. The head-mounted display device 100 includes the control section 140 that controls the display of the image display section 20. The control section 140 performs, on the basis of operation on the operation device 3, display control including processing for transitioning a screen displayed on the image display section 20 and transitions the screen. Therefore, it is possible to control the head-mounted display device 100 according to more intuitive input operation.

The operation device 3 includes the radio communication section 361 that transmits data indicating operation received by the operation section to the head-mounted display device 100. The control section 140 of the head-mounted display device 100 detects operation of the operation device 3 on the basis of the data transmitted from the operation device 3. Therefore, the operation in the operation device 3 can be surely detected in the head-mounted display device 100. It is possible to reduce a load on the head-mounted display device 100 related to detection of operation.

The operation device 3 includes the band section 300 functioning as a wearing section worn on the body of the user. It is possible to perform more intuitive input operation using the operation device 3 worn on the body of the user and control the head-mounted display device 100.

The operation sections of the operation device 3 detect operation involving rotation with, for example, the bezel 301 and the rotation detecting section 367. When data indicating the operation involving the rotation is transmitted from the operation device 3, for example, as shown in Figs. 10A and 10B, the control section 140 of the head-mounted display device 100 transitions the screen displayed on the image display section 20 according to a rotating direction of the operation. Therefore, it is possible to transition the screen according to the operation involving the rotation and realize more intuitive operation. Since the direction of the operation and the direction of the transition of the screen correspond to each other, it is possible to perform, for example, blind operation.

The control section 140 of the head-mounted display device 100 may perform, on the basis of data transmitted from the operation device 3, display control including any one of enlargement, reduction, and rotation of the image displayed on the image display section 20.

The control section 350 of the operation device 3 may detect a movement of the operation device 3 as operation.

The image display section 20 may be a display section of a transmission type that transmits an outside scene and causes the user to visually recognize the outside scene. In this case, the user can operate the operation device 3 while viewing the outside scene and control display of the head-mounted display device 100. The user can intuitively operate the head-mounted display device 100 without gazing only the head-mounted display device 100. This is suitable when the user uses the head-mounted display device 100 while viewing the outside scene.

The head-mounted display device 100 can transmit data for output to the operation device 3. The operation device 3 can receive, with the communication section, the data for output transmitted by the head-mounted display device 100 and output the received data for output.

When the control section 140 detects the operation target object 4 or 5 from the picked-up image of the camera 61, the control section 140 displays the image for operation associated with the operation target object 4 or 5 on the image display section 20 according to the operation target object 4 or 5. Consequently, it is possible to provide the user with information concerning the operation target object 4 or 5 separate from the head-mounted display device 100 to allow the user to easily understand the information.

When the control section 140 detects operation on the operation target object 4 or 5 that displays an image for operation, the control section 140 executes processing corresponding to operation content and the image for operation. Consequently, since the head-mounted display device 100 executes processing according to the operation on the operation target object 4 or 5, it is possible to realize intuitive operation using the operation target object 4 or 5.

The control section 140 functions as the detecting section that detects operation on the operation target object 4 or 5. Therefore, the control section 140 can quickly detect the operation on the operation target object 4 or 5. Even if the operation target object 4 or 5 does not have a communication function, the head-mounted display device 100 can execute processing according to the operation of the operation target object 4 or 5. The control section 140 detects the operation target object 4 or 5 on the basis of the picked-up image of the camera 61 and detects the operation on the operation target object 4 or 5. Consequently, even if the operation target object 4 or 5 does not execute communication, the head-mounted display device 100 can detect the operation target object 4 or 5 and detect the operation on the operation target object 4 or 5.

The head-mounted display device 100 includes the storing section 120 that stores the AR contents data 123 for AR-displaying the images for operation corresponding to the operation sections of the operation target object. The control section 140 can change the data for AR display stored by the storing section 120. Consequently, since data can be changed concerning the function of performing the AR display according to the operation target object, it is possible to change the data to correspond to a new operation target object or an unknown operation target object. Therefore, it is possible to reduce restrictions concerning the operation target object set as a target of the AR display. Further, it is possible to attain improvement of convenience.

The AR contents data 123 stored by the storing section 120 includes the position attribute data 123b for associating the elements, which are the images for operation, and the operation sections of the operation target object. The control section 140 can change the association between the images for operation and the operation sections of the operation target object in the AR contents data 123.

The invention can be implemented as a computer program executable by the control section 140 that controls the head-mounted display device 100 worn on the head of the user and including the image display section 20 of the transmission type that transmits an outside scene and causes the user to visually recognize the outside scene. The CPU of the control section 140 executes the computer program, whereby the operation device 3 and the operation target object 4 or 5 configured separately from the image display section 20 can be detected. The control section 140 detects the operation section of the operation device 3 or the operation target object 4 or 5 and AR-displays the image for operation in a position corresponding to the detected operation section. The control section 140 detects operation concerning the image for operation and executes processing corresponding to the image for operation for which the operation is detected. Consequently, the head-mounted display device 100 displays the image for operation corresponding to the operation device 3 or the operation target object 4 or 5 separate from the head-mounted display device 100 and executes processing according to the operation concerning the image for operation. Therefore, it is possible to cause the head-mounted display device 100 to execute processing using the operation device 3 or the operation target object 4 or 5. Further, it is possible to perform intuitive operation on the head-mounted display device 100.

Note that the invention is not limited to the configuration of the embodiment explained above and can be implemented in various forms without departing from the scope of the invention as defined by the claims.

In this embodiment, the example is explained in which the operation device 3 used as the user interface of the head-mounted display device 100 has the shape of the wristwatch. The invention is not limited to this. The operation device 3 only has to have a shape suitable for being worn on the body of the user who uses the head-mounted display device 100. For example, the operation device 3 can be a device of a ring shape, a brooch shape, a pendant or necklace shape, or a pen shape. The operation device 3 may be a device of a headphone type, an earphone type, or a headset type worn on the head or the ears of the user. In this case, the function of the operation device of the invention may be implemented in a headphone or an earphone that outputs sound. The function of the operation device of the invention may be implemented in a headset including a speaker that outputs sound and a microphone that collects voice uttered by the user. In this configuration, the headphone, the earphone, and the speaker may be a bone conduction speaker. The microphone may be a bone conduction microphone. In this case, the device desirably includes at least an operator that detects contact operation or pressing operation and includes the radio communication section 361, the LED 313, the cameras 311, and the nine-axis sensor 368. In these configurations, it is possible to obtain effects same as the effects in the embodiment excluding the operation related to display.

The operation device 3 in the embodiment is fixed to and held on the body of the user by the band section 300. However, the configuration of the operation device of the invention is not limited to this. That is, the operation device does not need to be fixed by the band section 300 or the like and only has to be capable of being worn on the body of the user. Therefore, the operation device may be formed in, for example, a shape simulating the pendant or the necklace or other accessories as explained above, or may be formed in the shape of a cap or a helmet, or may be formed in a form of clothes.

Further, the operation device of the invention is not limited to the form directly worn on or fixed to the body of the user. For example, a device equivalent to the operation device may be fixed to a wristwatch, an accessory, clothes, a bag, a cap, or a helmet worn on or fixed to the body of the user. The operation device in this case can be configured by, for example, excluding the band section 300 from the operation device 3.

The display system 1 may include a plurality of operation devices. For example, the display system 1 may include operation devices of different forms such as an operation device of a wristwatch type like the operation device 3 and an operation device of a pen type. In this case, the display screen in the head-mounted display device 100 may be transitioned on the basis of operation of the plurality of operation devices. Examples of a method in which the head-mounted display device 100 detects the operation in the plurality of operation devices include a method of transmitting data indicating the operation from the plurality of operation devices.

Further, the operation device 3 transmits data indicating detection values of the nine-axis sensor 368, which is an inertial sensor, to the head-mounted display device 100, whereby the display system 1 may operate regarding a movement of the operation device 3 as operation.

The control section 140 may perform association of an outside scene visually recognized through the image display section 20 and the display region of the image display section 20 using, for example, the detection values of the nine-axis sensor 368 and detection values of the nine-axis sensor 66 included in the head-mounted display device 100. In this case, it is possible to more highly accurately perform the association using detection values of sensors included in a plurality of devices. This association can be used, for example, when AR contents are displayed in the image display section 20.

The operation device 3 may include a sensor that measures a heart rate of the user. Specifically, a sensor or the like that irradiates light on the arm of the user and detects a beat can be used. In this case, the operation device 3 may transmit data concerning the measured heart rate to the head-mounted display device 100. The head-mounted display device 100 may display the data concerning the heart rate. For example, the head-mounted display device 100 may display a result obtained by statistically processing the heart rate, display the heart rate on a real-time basis, and process the heart rate and the detection values of the nine-axis sensor 368 and display data concerning an activity amount and physical condition management of the user. The head-mounted display device 100 may estimate a degree of excitement and a degree of fatigue of the user on the basis of the heart rate and change a display color and content of a displayed image on the image display section 20 to give comfort to the user.

In the embodiment, the example is explained in which the operation device 3 is an electronic device that operates with the power supply section 360. However, the invention is not limited to this. For example, a marker for specifying a position in a rotating direction of the bezel 301 may be provided in the bezel 301 of the operation device 3 and/or a position adjacent to the bezel 301 in the plane section 300A. In this case, the device control section 183 can calculate a rotating direction and a rotation amount of the bezel 301 on the basis of picked-up image data picked up by the camera 61. Even when the operation device 3 includes the power supply section 360, the head-mounted display device 100 may calculate a rotating direction and a rotation amount of the bezel 301 according to the operation explained above. This operation can be realized as an operation in a power saving operation mode for suppressing consumption of the power supply section 360. When a residual capacity of the power supply section 360 is small, the display system 1 may shift to the power saving operation mode according to control of the operation device 3 or the head-mounted display device 100.

The operation target object 4 or 5 only has to be configured separately from the image display section 20 of the head-mounted display device 100 and include the sections such as the winding crown 401 and the bezel 402, for which the images for operation are displayed, or the marker 510. Therefore, the operation target object 4 or 5 may be any object separate from the image display section 20, for example, stationery including a writing instrument, a tool, furniture, computer peripheral equipment, and various electronic apparatus such as a telephone. The operation target object 4 or 5 is not limited to an object worn on the body of the user. The original function of the operation target object 4 or 5 is not limited.

Instead of the image display section 20 in the embodiment, for example, an image display section of another form such as an image display section worn like a cap may be adopted. The image display section only has to include at least one of a display section that displays an image corresponding to the left eye of the user and a display section that displays an image corresponding to the right eye of the user. The display device of the invention may be configured as, for example, a head mounted display mounted on a vehicle such as an automobile or an airplane. The display device may be configured as, for example, a head mounted display incorporated in a body protector such as a helmet. In this case, a portion for positioning a position with respect to the body of the user and a portion positioned with respect to the portion can be formed as wearing sections.

Further, in this embodiment, the configuration in which the image display section 20 and the control device 10 are separated and connected via the connecting section 40 is explained as the example. The invention is not limited to this. The control device 10 and the image display section 20 may be integrally configured and worn on the head of the user.

As the control device 10, a notebook computer, a tablet computer, or a desktop computer may be used. As the control device 10, portable electronic apparatuses including a game machine, a cellular phone, a smart phone, or a portable media player, other dedicated apparatuses, or the like may be used. The control device 10 may be separated from the image display section 20. The control device 10 and the image display section 20 may transmit and receive various signals by radio communication.

For example, as a component that generates image light in the image display section 20, the image display section 20 may include an organic EL (electro-luminescence) display and an organic EL control section. As a component that generates image light, an LCOS (Liquid crystal on silicon; LCoS is a registered trademark), a digital micro mirror device, and the like can also be used.

As an optical system that guides the image light to the eyes of the user, a configuration can be adopted that includes an optical member for transmitting external light made incident on the device from the outside and makes the external light incident on the eyes of the user together with the image light. An optical member located in front of the eyes of the user and overlapping a part or the entire visual field of the user may be used. Further, an optical system of a scanning type that scans a laser beam or the like and changes the laser beam to image light may be adopted. The optical system is not limited to an optical system that guides the image light inside the optical member and may be an optical system including only a function of refracting and/or reflecting the image light to guide the image light to the eyes of the user.

For example, the invention can also be applied to a head mounted display of a laser retinal projection type. That is, a configuration may be adopted in which a light emitting section includes a laser beam source and an optical system for guiding a laser beam to the eyes of the user, makes the laser beam incident on the eyes of the user to scan the retina, and forms an image on the retina to thereby cause the user to visually recognize the image.

The invention can also be applied to a display device that adopts a scanning optical system including a MEMS mirror and makes use of a MEMS display technique. That is, the display device may include, as a light emitting section, a signal-light forming section, a scanning optical system including a MEMS mirror that scans light emitted by the signal-light forming section, and an optical member on which a virtual image is formed by the light scanned by the scanning optical system. In this configuration, the light emitted by the signal-light forming section is reflected by the MEMS mirror, made incident on the optical member, and guided in the optical member to reach a virtual-image forming surface. The MEMS mirror scans the light, whereby a virtual image is formed on a virtual image forming surface. The user catches the virtual image with the eyes to recognize an image. An optical component in this case may be an optical component that guides light through a plurality of times of reflection like, for example, the right light guide plate 261 and the left light guide plate 262 in the embodiment. A half mirror surface may be used as the optical component.

At least a part of the functional blocks shown in Figs. 3 and 4 may be realized by hardware or may be realized by cooperation of the hardware and software. The computer program executed by the control section 140 may be stored in the storing section 120 or a storage device in the control device 10. Alternatively, the computer program stored in an external apparatus may be acquired via the communication section 117 or the interface 125 and executed.

Among the components formed in the control device 10, only the operation section 111 may be formed as an independent user interface (UI). The components formed in the control device 10 may be redundantly formed in the image display section 20. For example, control sections equivalent to the control section 140 may be formed in both of the control device 10 and the image display section 20. The functions performed by the control section 140 formed in the control device 10 and the CPU formed in the image display section 20 may be separated from each other.

The invention can also be realized in various forms other than the head-mounted display device 100. For example, the invention can be realized in forms of a control method for the head-mounted display device 100, an information system including the head-mounted display device 100, a computer program for realizing the control method for the head-mounted display device 100 and the information system, a recording medium having the computer program recorded therein, a server apparatus connected to a communication line such as the Internet to distribute the computer program, and a data signal including the computer program and embodied in a carrier wave.

The entire disclosure of Japanese Patent Application Nos.2015-000749, filed January 6, 2015 and 2015-000750, filed January 6, 2015 and 2015-181843, filed September 15, 2015 are expressly incorporated by reference herein.

The foregoing description has been given by way of example only and it will be appreciated by a person skilled in the art that modifications can be made without departing from the scope of the present invention as defined by the claims.

## Claims

1. A display system (1) comprising:
a display device worn (100) on a head of a user and including a display section (20) of a transmission type configured to transmit an outside scene and cause the user to visually recognize the outside scene; and
an operation target object (3, 4, 5) configured separately from the display section, wherein
the display device includes a control section (140) configured to perform, according to the operation target object, with the display section, AR display related to the outside scene transmitted through the display section.

2. The display system according to claim 1, wherein the display device is configured to display, with the display section, in association with the operation target object, a control target associated image associated with the operation target object.

3. The display system according to claim 1 or claim 2, wherein the operation target object is an operation device (3) including:
an operation section (304, 366, 367) configured to receive operation by the user; and
a communication section (361, 362) configured to transmit data indicating the operation received by the operation section to the display device, and
the control section of the display device is configured to perform the AR display with the display section on the basis of operation of the operation device.

4. The display system according to claim 3, wherein the control section of the display device is configured to perform, on the basis of the operation of the operation device, in a form associated with the operation section, with the display section, the AR display related to the outside scene transmitted through the display section.

5. The display system according to claim 3 or claim 4, wherein the control section is configured to detect the operation of the operation section on the basis of data transmitted from the operation device and change, according to the detected operation, the AR display being displayed on the display section.

6. The display system according to any one of claims 3 to 5, wherein the control section is capable of setting allocation of the AR display to the operation section.

7. The display system according to claim 6, wherein the control section is capable of executing processing for updating the allocation of the AR display to the operation section.

8. The display system according to any one of claims 3 to 7, wherein the control section of the display device is configured to calculate relative positions of the operation device and the display device and perform the AR display with the display section on the basis of the calculated relative positions.

9. The display system according to any one of claims 3 to 8, wherein
the operation section includes a touch operation section (304) configured to detect contact operation,
the touch operation section includes a plurality of operation regions, and
the control section is configured to display, with the display section, the AR display allocated to the operation region operated by the touch operation section.

10. The display system according to any one of claims 3 to 9, wherein the operation device includes an image pickup section (311) and is configured to transmit, with the communication section, data including a picked-up image of the image pickup section to the display device.

11. The display system according to any one of the preceding claims, wherein the operation device includes a wearing section (300) worn on the body of the user.

12. The display system according to any one of the preceding claims, wherein, when detecting the operation target object, the control section included in the display device is configured to display, according to the operation target object, on the display section, a control target associated image associated with the operation target object.

13. The display system according to claim 12, wherein, when detecting operation on the operation target object for which the control target associated image is displayed, the control section (140) included in the display device (100) is configured to execute processing corresponding to operation content and the control target associated image.

14. A control method for controlling a display device (100), which includes a display section (20) worn on a head of a user, using an operation target object (3, 4, 5) configured separately from the display section, the control method comprising performing, with the display device, according to the operation target object, AR display related to an outside scene transmitted through the display section.

15. A computer program executable by a control section (140) for controlling a display device (100) worn on a head of a user and including a display section (20) of a transmission type configured to transmit an outside scene and cause the user to visually recognize the outside scene, the computer program causing the control section to:
detect an operation target object configured separately from the display section;
detect an operation section included in the operation target section;
display an image for operation in a position corresponding to the detected operation section of the operation target object;
detect operation concerning the image for operation; and
execute processing corresponding to the image for operation for which the operation is detected.
